# EUROPEAN PATENT APPLICATION

(11) **EP 4 761 460 A1**
(43) Date of publication of application: **17.06.2026**
(21) Application number: 24219603.8
(22) Date of filing: 12.12.2024
(51) Int. Cl.: H04W 88/08, H04W 8/02, H04W 24/02, H04W 60/00, H04W 92/00, H04W 4/16, H04W 48/18

(54) **RADIO ACCESS NETWORK NODE FOR A TELECOMMUNICATION NETWORK**

(71) Applicant: Deutsche Telekom AG, 53113 Bonn (DE)
(72) Inventor: COLOM IKUNO, Josep, 2100 Korneuburg (AT)
(74) Representative: 2SPL Patentanwälte PartG mbB

(57) **Abstract**

The present disclosure relates to a Radio Access Network (RAN) node for telecommunication networks, enabling dynamic interaction with a Network Repository Function (NRF). The RAN node may register its capabilities and configurations through a detailed RAN profile, including parameters such as supported services, protocols, frequencies, location, and energy efficiency. It may query the NRF to discover and select other RAN or Core Network (CN) nodes based on these parameters, facilitating optimized mobility, handovers, and resource management. The RAN node may support subscription-based notifications for updates about relevant nodes, allowing proactive configuration and reduced handover delays. It may establish secure communication with discovered nodes using endpoint and protocol information obtained from the NRF. The present disclosure may enhance scalability, flexibility, and efficiency by reducing reliance on traditional CN components for endpoint resolution. It may support modern network functionalities like Integrated Sensing and Communication (ISAC) and advanced service-based architectures, ensuring compatibility with future telecommunication systems.

## Description

### Field

The present disclosure generally relates to radio access networks (RANs) in telecommunications systems and, more particularly, to methods and apparatus for enhancing the flexibility, configurability, and efficiency of RAN functionality within next-generation mobile communication systems through the application of Service-Based Architecture (SBA).

### Background

In the current state of mobile network technology, the evolution from legacy 4G systems to 5G networks has been marked by significant advancements in Core Network (CN) architecture. Specifically, the adoption of SBA in the Core Network has enabled modularity, dynamic discovery of network functions, and scalable deployment of network services. However, despite these developments in the CN, RAN implementations have largely retained legacy architectures and interfaces, such as the NG and Xn interfaces, which are based on static configurations and protocol stacks designed for older paradigms. These limitations in RAN design hinder its ability to fully integrate with modern network infrastructures, reducing scalability and restricting support for innovative functionalities such as advanced mobility management, optimized signaling, and dynamic service discovery.

One notable shortcoming of the current RAN implementation is its dependency on intermediary network functions like the Access and Mobility Management Function (AMF) for tasks such as endpoint resolution and signaling. This dependency creates bottlenecks, increases signaling overhead, and limits the ability of RAN nodes to independently access necessary resources or coordinate efficiently with other nodes. Furthermore, the lack of mechanisms for dynamic discovery and configuration within the RAN prevents effective deployment of advanced services like ultra-reliable low-latency communication (URLLC) and integrated sensing and communication (ISAC), which are critical for meeting the demands of emerging 6G networks. These challenges are compounded by the static nature of current RAN-to-RAN communication, which relies heavily on pre-established configurations and cannot adapt dynamically to changing network conditions or requirements.

Thus, there is a need for a system and method that enable the RAN to evolve into a service-based, modular architecture capable of dynamic discovery, efficient signaling, and enhanced inter-node communication, while minimizing dependency on intermediary functions and improving the overall scalability and flexibility of next-generation mobile networks.

### Summary

This need is addressed by apparatuses and methods in accordance with the independent claims. Potentially advantageous embodiments are addressed by the dependent claims.

According to a first aspect of the present disclosure, there is proposed a RAN (Radio Access Network) node for a telecommunication network. The RAN node comprises processing circuitry that is configured to register the RAN node with a NRF (Network Repository Function). The processing circuitry is configured to provide a RAN profile including parameters indicative of the node's capabilities and/or configurations. The processing circuitry is configured to query the NRF using the parameters in the RAN profile to obtain information about other RAN or CN (Core Network) nodes. The processing circuitry is configured to establish communication with other RAN or CN nodes based on the information obtained from the NRF. Thus, the RAN node may interact with the NRF to advertise its capabilities, discover other network entities, and establish communication links. The RAN profile may include attributes such as supported technologies, location, or load capacity, which help the NRF provide relevant results during queries. By enabling interaction with other nodes, the RAN node may integrate seamlessly into the network and supports cooperative operations. This may enhance the scalability, interoperability, and efficiency of the telecommunication network.

According to some embodiments, the processing circuitry is configured to send a registration request to the NRF. The processing circuitry may be configured to include the RAN profile in the registration request. The processing circuitry may be configured to receive a confirmation from the NRF indicating successful registration. Thus, the registration request may formally introduce the RAN node to the NRF by providing its profile details. The confirmation may ensure that the RAN node has been successfully integrated into the system, allowing it to interact with other network functions. This may improve the reliability and traceability of the registration process, ensuring proper network operation and management.

According to some embodiments, the registration request includes at least one of the following. The registration request may include an endpoint address of the RAN node for communication. The registration request may include supported communication protocols. The registration request may include identifiers of services provided by the RAN node. The endpoint address may include an IP address or URL that allows other network functions to connect to the RAN node. Supported communication protocols may specify compatibility with interfaces like HTTP/2 or Xn Application Protocol (Xn-AP). Service identifiers may define the capabilities offered by the RAN node, such as load balancing or mobility management. This may provide clarity and specificity in the registration process, improving subsequent interactions with other network entities.

According to some embodiments, the parameters indicative of the RAN node's capabilities and configurations include one or more of the following. The parameters include supported RATs (Radio Access Technologies). The parameters include supported RAT types. The parameters include supported frequency bands. The parameters include energy efficiency metrics. The parameters include geographical or signal-based location information of the RAN node. The parameters include load or traffic-handling capacity of the RAN node. RATs may specify technologies like LTE (Long-Term Evolution) or NR (New Radio), while frequency bands may indicate operational spectra. Energy efficiency metrics may include power consumption per transmission. Geographical or signal-based information may define the node's position or coverage area. Load capacity may reflect the traffic the node can handle effectively. This may optimize resource allocation and ensure compatibility with network demands.

According to some embodiments, the parameters indicative of the RAN node's capabilities and configurations include one or more of the following. The parameters include identifiers of supported subscription types. The parameters include tracking area identifiers associated with the RAN node. The parameters include cell information, including Physical Cell IDs (PCIs) and/or Global Cell IDs (GCls). Subscription types may define categories such as individual or group subscriptions. Tracking area identifiers may represent regions managed by the RAN node. PCIs and GCls uniquely identify individual cells for mobility management or location services. This may improve user mobility management and ensure seamless service delivery within the network.

According to some embodiments, the processing circuitry is configured to dynamically update the RAN profile. The processing circuitry may be configured to update the profile in response to changes in the node's capabilities or configurations. The processing circuitry may be configured to notify the NRF of such updates. Thus, the RAN node may detect changes such as added frequency bands, improved load capacity, or energy-saving configurations and update its profile accordingly. These updates may ensure the NRF always has accurate data for efficient network management. This may enhance the adaptability of the network and ensure that decisions are made using the most current information.

According to some embodiments, the RAN profile is formatted according to a standardized data model. The standardized data model is compatible with a SBA (Service-Based Architecture) interface. The use of a standardized data model may ensure interoperability between the RAN node and other SBA-based network entities. This may involve using formats and APIs (Application Programming Interfaces) defined by 3GPP standards. This may simplify implementation and enhance compatibility across different network components and vendors.

According to some embodiments, the processing circuitry is configured to send a query request to the NRF. The processing circuitry may be configured to include one or more query parameters in the request. The processing circuitry may be configured to receive a response from the NRF containing information about RAN or CN nodes matching the query parameters. Thus, the RAN node may send a query specifying requirements such as supported frequency bands, RATs, or load thresholds. The NRF may respond with details of nodes that meet the criteria, enabling the RAN node to connect with the most suitable options. This may improve the precision and efficiency of node discovery and interaction.

According to some embodiments, the processing circuitry is configured to receive a NF (Network Function) profile from the NRF. The NF profile comprises the endpoint address of a RAN or CN node. The NF profile includes supported protocols for communication with the RAN or CN node. The NF profile includes configurations and capabilities of the RAN or CN node. The NF profile may provide essential details, such as the IP address, communication protocols like NG Application Protocol (NG-AP), and capabilities such as load-balancing or security features. These details help the RAN node establish a compatible connection. This may reduce setup errors and ensure reliable communication with other network entities.

According to some embodiments, the processing circuitry is configured to establish communication with the RAN or CN node. The processing circuitry may be configured to use the endpoint address and protocols specified in the NF profile to establish the communication. Thus, the RAN node may use the information from the NF profile to initiate communication with the target node. This may ensure that the communication setup is aligned with the technical specifications of the target node. This may streamline the connection process and improve the reliability and efficiency of network operations.

According to some embodiments, the parameters used in the query may include supported radio access technologies, RATs, or frequency bands. The parameters may include geographical or signal-based location information. The parameters may include load or energy efficiency metrics. The parameters may include service-specific requirements, such as ultra-reliable low-latency communication, URLLC, or integrated sensing and communication, ISAC, support. Thus, the query may specify RATs such as LTE or NR, allowing the RAN node to target nodes operating on compatible technologies. Geographical location information may refer to coordinates or areas served by the nodes, while signal-based information could include measurements like received signal strength or quality. Load metrics may indicate the traffic-handling capacity of a node, and energy efficiency metrics may consider parameters like power consumption per bit. Service-specific requirements like URLLC may ensure the query prioritizes nodes capable of handling time-critical and highly reliable applications, while ISAC focuses on nodes supporting sensing capabilities alongside communication. This may allow the RAN node to tailor queries to match technical and service needs, enhancing the efficiency of node selection and utilization.

According to some embodiments, the processing circuitry is configured to filter potential nodes based on predefined thresholds for parameters, including geographical proximity, signal strength, or load capacity, to narrow down query results. Thus, filtering may involve comparing node attributes with preset thresholds. For example, geographical proximity may be assessed using location data to prioritize nodes within a certain radius. Signal strength thresholds may ensure only nodes with acceptable signal quality are considered, while load capacity thresholds may exclude nodes operating near their maximum capacity. These thresholds may be dynamically adjusted based on network conditions or service requirements. This may reduce the computational overhead of processing large query results and ensure that only optimal nodes are selected, improving resource allocation and user experience.

According to some embodiments, the query enables the RAN node to discover neighboring RAN nodes for mobility management or handover procedures. The query may enable the RAN node to discover CN nodes supporting specific services or functionalities required by the RAN node. The query may enable the RAN node to discover backup or redundant nodes for enhanced reliability. The query may provide a centralized means of managing node dis-coverability and inter-node topology. Thus, discovering neighboring RAN nodes may support seamless user equipment (UE) mobility by enabling efficient handovers between cells. Querying for CN nodes may help locate nodes providing specific services like authentication, session management, or network slicing. Backup or redundant nodes may ensure fault tolerance, allowing the network to maintain functionality during node failures. This may improve service continuity, optimize resource utilization, and enhance network robustness.

According to some embodiments, the processing circuitry is configured to periodically send updated queries to the NRF to account for changes in the status or capabilities of RAN or CN nodes. Thus, periodic queries may reflect real-time updates to the network topology or node capabilities. For instance, a node that was previously congested may now have available resources, or a node may update its supported services following a software upgrade. This ensures that the RAN node operates based on current network information. This may improve the accuracy and responsiveness of the network by enabling timely adjustments to changing conditions.

According to some embodiments, the processing circuitry is configured to query dynamically in response to an event. The event may include receipt of measurement reports from a UE. The event may include detection of changes in the RAN node's operational parameters. The event may include a trigger for initiating a handover or mobility management procedure. Thus, events like measurement reports from a UE may include metrics such as signal strength, quality, or latency from neighboring cells, which the RAN node may use to refine its queries. Changes in the RAN node's parameters, such as increased load or degraded performance, may prompt the node to find alternatives. Triggers like an imminent handover may require identifying suitable target nodes to ensure seamless connectivity. This may enhance the network's adaptability to real-time scenarios, ensuring efficient and uninterrupted service.

According to some embodiments, the query request and response adhere to an SBA interface protocol using standardized APIs. Thus, the use of SBA protocols may ensure that the RAN node communicates with the NRF and other network functions in a uniform and interoperable manner. Standardized APIs, such as those based on RESTful HTTP, may simplify the exchange of information and reduce integration complexity. This may also ensure that the query and response formats align with 3GPP specifications for service-based architecture. This may simplify implementation and improve compatibility across diverse network components.

According to some embodiments, the processing circuitry is configured to extract endpoint addresses of target RAN or CN nodes from the information obtained from the NRF. The processing circuitry may be configured to establish communication with a RAN or CN node using a protocol supported by the target node. Thus, endpoint addresses may include specific IP addresses or fully qualified domain names that the RAN node can use for communication. Supported protocols may depend on the node type, such as NG Application Protocol (NG-AP) for core network interactions or Xn Application Protocol (Xn-AP) for inter-RAN communication. This ensures that connections are compatible with the target node's technical specifications. This may ensure reliable communication and reduce the likelihood of protocol mismatches.

According to some embodiments, the protocol used for establishing communication is selected from NG-AP, Xn-AP, or SBA interfaces based on HTTP/RESTful APIs. Thus, NG-AP may facilitate interactions between the RAN node and core network nodes like the Access and Mobility Management Function (AMF). Xn-AP may support handovers and coordination between neighboring RAN nodes, especially in dual connectivity scenarios. SBA interfaces based on HTTP/RESTful APIs may enable flexible service discovery and interaction in cloud-native architectures. This may enhance communication flexibility and ensure compliance with established 3GPP protocols.

According to some embodiments, the processing circuitry is configured to receive, from a UE, a report including one or more cell identifiers. The processing circuitry is configured to query the NRF using the cell identifiers to identify one or more target RAN nodes associated with the reported cell identifiers. Thus, cell identifiers in the report may include Physical Cell IDs (PCI) or Global Cell IDs (GCI), which uniquely identify the serving or neighboring cells. The RAN node may use these identifiers to query the NRF and retrieve information about nodes managing the reported cells. This may help in selecting appropriate nodes for mobility management or load balancing. This may ensure efficient utilization of network resources and improve service continuity during mobility events.

According to some embodiments, the query to the NRF includes additional parameters to identify RAN nodes based on geographical proximity to the reported cell identifiers. The may query include additional parameters to identify RAN nodes based on signal propagation characteristics relative to the reported cell identifiers. Thus, geographical proximity may refer to the physical distance between the UE and the identified nodes, enabling selection of the closest nodes. Signal propagation characteristics may include path loss, interference levels, or signal-to-noise ratios that influence the quality of connectivity. Additional parameters may involve thresholds or preferences defined by the operator or based on real-time network metrics. This may optimize node selection for enhanced connectivity and user experience.

According to some embodiments, the processing circuitry is configured to select a target RAN node for handover based on information obtained from the NRF, including the capabilities and configurations of the identified RAN nodes. Thus, the processing circuitry may evaluate the NRF-provided data, such as the load capacity, supported frequency bands, or geographical location of identified RAN nodes, to choose the most suitable node for a handover. By using detailed information about the capabilities and configurations, the RAN node may ensure a seamless and efficient handover process. This may reduce latency and maintain service continuity for UE during mobility. This may enhance the reliability and performance of mobility management, particularly in dynamic network environments.

According to some embodiments, the processing circuitry is further configured to subscribe to notifications from the NRF for updates to RAN profiles based on one or more predefined parameters. The subscription may enable the RAN node to receive proactive updates whenever relevant changes occur in the NRF database. These predefined parameters may include criteria such as geographical proximity, load thresholds, or the addition of new services in other RAN nodes. By subscribing to such updates, the RAN node may stay informed about the latest network developments without the need for frequent polling. This may improve the efficiency of network operations and ensure that the RAN node has access to timely and relevant information for decision-making.

According to some embodiments, the predefined parameters for subscription include location-based criteria, including geographical distance or specified geographical areas. The predefined parameters include pathloss-based criteria, including signal pathloss distance relative to the RAN node's location. The predefined parameters include frequencies or frequency bands supported by other RAN nodes. The predefined parameters include capabilities supported by other RAN nodes, including specific services or hardware features. Thus, location-based criteria may ensure updates focus on nearby nodes or specific regions of interest, while pathloss-based criteria may use signal attenuation metrics to prioritize nodes with better connectivity potential. Frequency-related parameters may filter updates to only include nodes operating on compatible or desired frequency bands. Capability-related parameters may focus on nodes providing required services, such as ultra-reliable low-latency communication (URLLC) or network slicing support, or nodes with specialized hardware features like massive MIMO (Multiple-Input Multiple-Output) antennas. This may allow the RAN node to customize its subscription to ensure it receives only the most relevant updates, enhancing decision-making efficiency.

According to some embodiments, the processing circuitry is configured to receive a notification from the NRF when a new RAN profile is registered or an existing RAN profile is updated that matches the parameters of the subscription. Thus, the NRF may send notifications whenever a RAN node meeting the subscription criteria becomes available or updates its capabilities. For instance, if a new RAN node is added to a nearby geographical area or a node increases its load capacity, the RAN node may receive immediate updates. This dynamic notification mechanism may ensure that the RAN node has the latest information for operational planning or decision-making. This may improve responsiveness and adaptability, ensuring that the network operates efficiently in changing conditions.

According to some embodiments, the received notification includes details of the RAN profile associated with the subscription parameters. The details may comprise endpoint addresses for communication with the other RAN node. The details may comprise supported capabilities and configurations of the other RAN node. The details may comprise frequencies and location information of the other RAN node. Thus, the endpoint addresses may include IP addresses or URLs for direct communication with the notified RAN node. Supported capabilities and configurations may outline the node's ability to handle specific tasks, such as processing high traffic volumes or supporting particular RATs. Frequencies and location information may specify the operational frequency bands and the geographical area served by the RAN node. These details may help the RAN node prepare for tasks such as mobility management, resource allocation, or service optimization. This may ensure that the RAN node has all necessary data for seamless interaction, improving the efficiency and accuracy of network operations.

According to a further aspect of the present disclosure, it is proposed a method for a RAN node for a telecommunication network. The method comprises registering the RAN node with an NRF. The method comprises providing a RAN profile including parameters indicative of the RAN node's capabilities and/or configurations. The method comprises querying the NRF using the parameters in the RAN profile to obtain information about other RAN or CN (Core Network) nodes. The method comprises establishing communication with other RAN or CN nodes based on the information obtained from the NRF.

This method may be computer-implemented. Thus, embodiments also comprise a computer program having program code which, when executed by a RAN node in a telecommunication network, causes the RAN node to register with a NRF. The program code further causes the RAN node to provide a RAN profile including parameters indicative of the RAN node's capabilities and/or configurations. Additionally, the program code causes the RAN node to query the NRF using the parameters in the RAN profile to obtain information about other RAN or CN nodes. The program code also causes the RAN node to establish communication with other RAN or CN nodes based on the information obtained from the NRF. The computer program may be stored on a non-transitory computer-readable medium, such as a memory or storage device accessible by the RAN node.

### Brief description of the Figures

Some examples of apparatuses and/or methods will be described in the following by way of example only, and with reference to the accompanying figures, in which
- Fig. 1A: shows a high-level architecture of a telecommunication system;
- Fig. 1B: shows a more detailed view of communication between a UE and a core network via a RAN
- Fig. 2: illustrates a reference architecture of a 5G system;
- Fig. 3A: illustrates a basic request-response interaction between two network functions (NFs);
- Fig. 3B: illustrates a subscribe-notify interaction model where one NF subscribes to updates from another;
- Fig. 3C: expands the subscribe-notify model, including an intermediate NF relaying updates to a third NF;
- Fig. 4A: shows a process of a NF registering its NF profile with an NRF;
- Fig. 4B: represents a NRF query process, where a NF discovers specific network functions based on predefined parameters;
- Fig. 5A: illustrates the protocol stack for the N2 interface;
- Fig. 5B: illustrates a more complex interaction involving the N2 and N11 interfaces;
- Fig. 5C: illustrates the protocol stack for the Xn interface;
- Fig. 6A-C: show scenarios of dynamic profile updates, event-based queries, or additional communication models;
- Fig. 7: depicts an architecture of the RAN node including processing circuitry;
- Fig. 8: demonstrates an enhanced mobility procedure using RAN profile queries for optimized handover target selection;
- Fig. 9: illustrates proactive subscription to RAN profile updates, enabling fasterXn link establishment and reducing handover delays; and
- Fig. 10: shows NRF-based bootstrapping for RAN-to-CN communication, where the gNB queries the NRF to discover endpoints of CN nodes.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

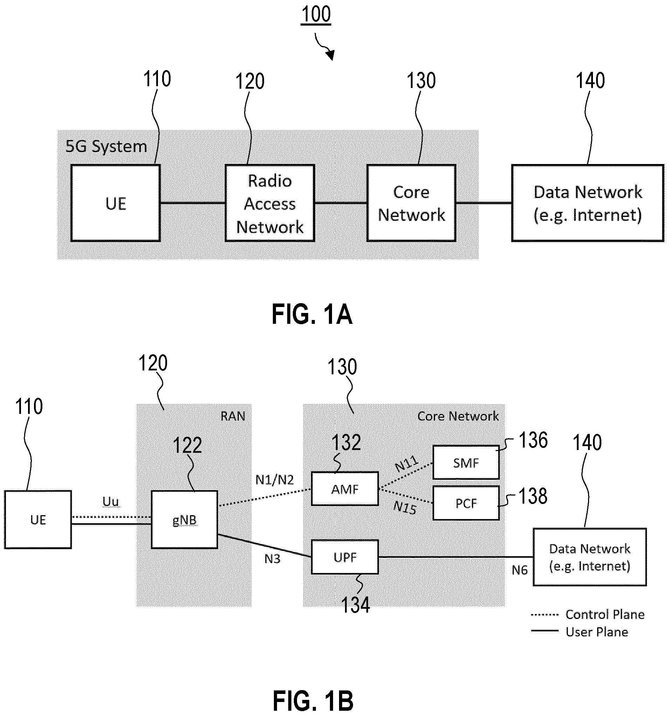

The current paradigm divides the mobile network in two main parts: Access Network (AN) and Core Network (CN). **Fig. 1A** illustrates a high-level architecture of a 5G system 100, including high-level network components and their interconnections.

Fig. 1A shows a UE 110, a RAN 120, a CN 130, and a Data Network (DN) 140, such as the Internet. The UE 110, which can include devices like smartphones, loT sensors, or connected vehicles, serves as an access point for users to connect to the network 100. It may establish a wireless connection with the RAN 120, which may act as a bridge between the user devices and the CN infrastructure. The communication between the UE 110 and the RAN 120 may occur over a 5G New Radio (NR) interface, which may provide high-speed, low-latency connectivity and efficient spectrum utilization.

RAN 120 may comprise base stations, typically referred to as gNodeBs, which may handle functions such as radio resource management, data transmission, and enforcing quality of service parameters. RAN 120 may connect to CN 130 through standardized interfaces, such as the NG (Next Generation) interface, enabling seamless data flow and session continuity as users move across coverage areas.

CN 130, which may form a backbone of the 5G system 100, is responsible for functions such as authentication, mobility management, and session management. It may orchestrate efficient routing of traffic to and from the DN 140 while maintaining secure and reliable communication. Within the CN 130, various functional components such as an Access and Mobility Management Function (AMF), a Session Management Function (SMF), and a User Plane Function (UPF) may collaborate to manage signaling, control, and data transmission effectively. In real-world deployments, network functions such as the AMF, the SMF, and the UPF may be implemented as software-based, virtualized network functions running on commercial hardware or specialized network appliances. This virtualization may be made possible through technologies such as Network Functions Virtualization (NFV) and Software-Defined Networking (SDN), which allow network operators to deploy, scale, and manage these functions flexibly and efficiently. CN 130 may also support advanced features such as network slicing, which may allow the logical partitioning of network resources to cater to diverse use cases and service requirements.

DN 140, representing external systems such as the Internet, enterprise networks, or cloud services, may connect to CN 130 through established interfaces. It may facilitate the delivery of content, applications, and services to UE 110, completing the end-to-end communication pathway.

The objective of the 5G architecture is to provide the UE 110 with connectivity towards DN 140. Going in more detail, the UE 110 communicates with the RAN 120 via a radio interface, which is used for conveying both signaling information and data traffic. Even if there is a logical separation (logical channels), for obvious reasons both types of data end up being transmitted over the same physical medium. Between the RAN 120 and the CN 130, signaling information and user data may be separated in different interfaces: N1/N2 and N3 in the 5G case, the former running on a SCTP/NG-AP/NAS protocol stack and the latter running on a UDP/GTP-U protocol stack. This is illustrated in **Fig. 1B****.**

Fig. 1B provides a more detailed representation of the 5G system architecture 100, emphasizing interfaces and network components involved in connecting the UE 110 to the DN 140. It shows some key elements of the 5G RAN 120 and CN 130 and illustrates a separation of the control plane (CP) and user plane (UP) within the network. This representation expands upon Fig. 1A by including explicit protocol stacks and specific network functions, providing a more granular view of the architecture.

In Fig. 1B, the UE 110 communicates with the RAN 120 through the Uu interface, which supports both signaling and user data. The RAN 120 is represented by a gNodeB (gNB) 122, which may manage communication between the UE 110 and the CN 130. It uses distinct interfaces for control and user planes. The N1 and N2 interfaces link the gNB 122 to an AMF 132 in the CN 130 for control signaling. These interfaces may operate on a protocol stack comprising SCTP, NG Application Protocol (NG-AP), and Non-Access Stratum (NAS). Conversely, user data may be transmitted via the N3 interface, connecting the gNB 122 to a UPF 134 through a stack utilizing UDP and GTP-U.

The CN 130 depicted in Fig. 1B is segmented into control plane (CP) and user plane (UP) functions, with the AMF 136 handling mobility and access management in conjunction with a SMF 136 and Policy Control Function (PCF) 138. The AMF 132 communicates with the SMF 136 for session management signaling and with the PCF 138 for policy control. NAS containers can be forwarded by the AMF, especially regarding NAS-SM between the AMF and other NFs, especially the SMF. This separation aligns with the 5G architecture's service-based design, allowing modular and flexible management of network functions.

The UPF 134 is dedicated to processing and routing user data between the gNB 122 and the DN 140 via the N6 interface. This architecture reflects the 5G system's decoupling of control and user planes, optimizing both efficiency and scalability. Finally, the DN 140 serves as the destination for user traffic, which can include Internet access or private services.

In order to establish a data connection enabling the UE 110 to communicate with the DN 140, a PDU session may be required. A PDU session is a logical data transport channel terminated at the CN 130 that provides connectivity to the DN 140. The termination point of a given PDU session (UPF 134 in Fig. 1B and how it works in 5G) may be termed PDU Session Anchor (PSA).

Service Based Architecture (SBA) is the Architecture 3GPP specified for the 5GC. It refers to a system architecture in which the system functionality is achieved by a set of network functions (NFs) providing services to other authorized NFs to access their services. In an SBI-based interface, each 5GC SBI API specification should include the following information for each specified service:
- Purpose of the API;
- URIs of resources;
- Supported HTTP methods for a given resource;
- Supported representations (e.g. JSON,);
- Request body schema(s) (where applicable);
- Response body schema(s) (where applicable);
- Supported response status codes;
- Relation types supported if HATEOAS is implemented by the API;
- a reference in the resource description clause to one of the archetypes defined in Annex C if the resource design matches one of them; and
- a list defining identifiers of optional features.

One important aspect is that such APIs (and by extension network elements within the 5GC) can be dynamically discovered by means of a Network Repository Function (NRF). The NF discovery and NF service discovery enable CN entities (NFs or Service Communication Proxy (SCP)) to discover a set of NF instance(s) and NF service instance(s) for a specific NF service or an NF type. NF service discovery is enabled via the NF discovery procedure.

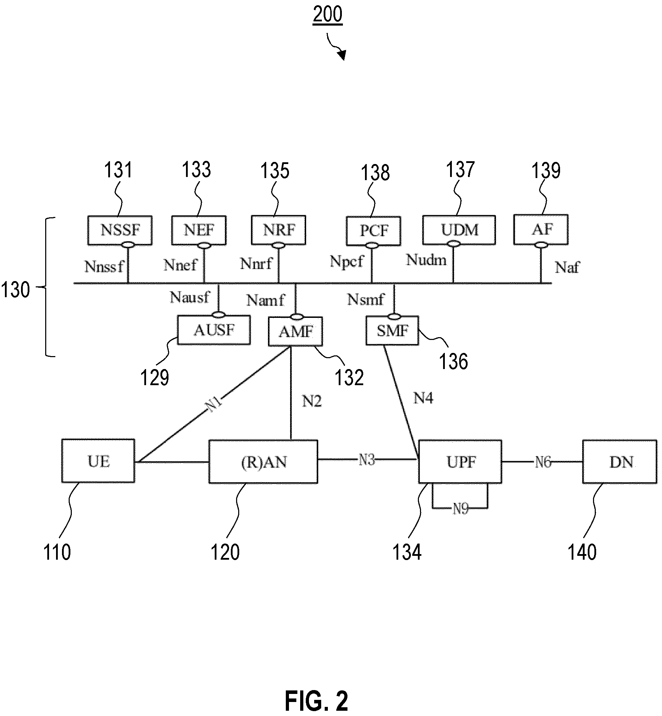

**Fig. 2** represents a non-roaming reference architecture 200 of a 5G system, showcasing various NFs and the interfaces between them. The diagram comprises both CN components and the (radio) access network ((R)AN), illustrating how they may interact to provide end-to-end communication services.

Starting from bottom left, the UE 110 represents a mobile device, such as a smartphone or loT device, which connects to the 5G network. The UE 110 communicates with the (R)AN 120. RAN 120 is responsible for managing radio communication between the UE 110 and the CN 130. RAN 120 includes 5G base stations known as gNodeBs (gNBs) that handle radio signal processing, scheduling, and handovers. The interface between UE 110 and the RAN 120 may be labeled Uu, which is the radio interface used for wireless communication.

An AMF 132 is part of the 5G Core Network 130 and may manage user registration, connection, mobility, and security. It may act as a primary point of contact for the UE 110 in the control plane, handling the signaling messages for connection setup and mobility management. AMF 132 may interact with the RAN 120 over an N2 interface, which may be used for control plane signaling between RAN 120 and AMF 132, such as signaling for handovers and session establishment.

A SMF 136 is another key component of the core network 130 that may be responsible for session management and IP address allocation. It may manage the user data sessions, including setting up, modifying, and releasing the sessions. The SMF 136 may communicates with the AMF 132 over a N11 interface, which is used for control signaling related to session management, such as establishing and managing the data sessions between UE 102 and the data network (DN) 140. SMF 136 may also interact with a User Plane Function (UPF) 134 over a N4 interface. The UPF 134 may be responsible for forwarding user data packets, enforcing Quality of Service (QoS) policies, and performing traffic routing. The UPF 134 may serve as anchor point for data traffic coming from and going to the UE 110 and may be responsible for connecting to the external DN 140, such as the Internet or a private enterprise network. The connection between the UPF 134 and the DN 140 is via a N6 interface, which carries user plane traffic to and from an external network.

To facilitate authentication and security, a Authentication Server Function (AUSF) 129 is included in the architecture. The AUSF 129 is responsible for authenticating the UE 110 and ensuring secure access to the network. It may interact with the AMF 132 over the N12 interface for the authentication process, using credentials and keys to verify the identity of the UE 110.

NRF 135 may serve as a central registry for network functions in the 5G core network. It maintains a repository of available NFs and their capabilities, enabling service discovery and communication between NFs. NRF 135 may interact with other NFs such as AMF 132, SMF 136, and others over the Nnrf interface. This interface allows network functions to register themselves with NRF 135, discover other NFs, and obtain information about their capabilities and endpoints.

A Policy Control Function (PCF) 138 may be responsible for managing policy rules in the network, such as QoS policies, access control, UE policies and traffic steering. It may provide policy control decisions to other NFs, ensuring that network resources are allocated and used according to the operator's policies. PCF 138 interacts with the AMF 132, SMF 136, and other NFs over the Npcf interface to provide policy-related information, allowing these functions to enforce the required policies during session and mobility management.

A Unified Data Management (UDM) function 137 may be a central data repository that manages subscriber information, such as subscription data, authentication credentials, and user profiles. It may interact with other NFs like AMF 132 over the Nudm interface to provide user data and policy information needed for mobility management, session management, and authentication procedures.

A Network Exposure Function (NEF) 133 may enable external applications to securely access certain network capabilities and services. It may act as a gateway that exposes network services to external entities while enforcing security and policy controls. NEF 133 may interact with PCF 138, AMF 132, and other NFs over the Nnef interface, allowing external applications to influence the network's behavior, such as requesting QoS adjustments or modifying policies for specific services.

An Application Function (AF) 139 may represent external application services that interact with the 5G core network to request specific network behaviors. AF 139 may communicate with PCF 138 over the Naf interface, requesting policies or configurations to optimize the network for particular application requirements, such as video streaming or low-latency gaming.

The 5G Control Plane (CP) is a part of the 5G network responsible for managing and controlling how data and services flow through the network. It may handle functions such as establishing connections, managing mobility as users move between different network areas, and enforcing policies like quality of service. Essentially, the CP oversees the signaling and coordination between different network elements to ensure that user data is delivered correctly and efficiently. In the 5G architecture, the CP primarily uses a Service-Based Architecture (SBA), meaning that the various NFs communicate with each other through APIs and HTTP-based protocols. This approach allows for more flexible and scalable communication between different network components, enabling the network to adapt to varying demands and efficiently manage resources.

The technical realization of SBA compared to previous iterations of 3GPP networks (i.e. pre-5G) includes:
- NFs expose one or more services (NF services)
- NF service registration and de-registration: to make NRF 116 aware of available NF instances, their supported services/functionalities and service endpoint(s)
- NF service discovery: to enable a NF to discover (typically) via NRF 116 other NFs/NF services matching a given search query
- NF service authorization: enables an NF to request authorization of a certain scope via NRF 116 to operate on NF services and enforces it (based on OAuth 2.0, TS 33.501)
- a NF service is an HTTP API described in the 3GPP specifications using OpenAPI
- a Nxxx Service Based Interface (SBI) refers to the services exposed by a NF
- a new CP protocol stack including integrated security

SBA defines two different interaction modes: request-response and subscribe-notify.

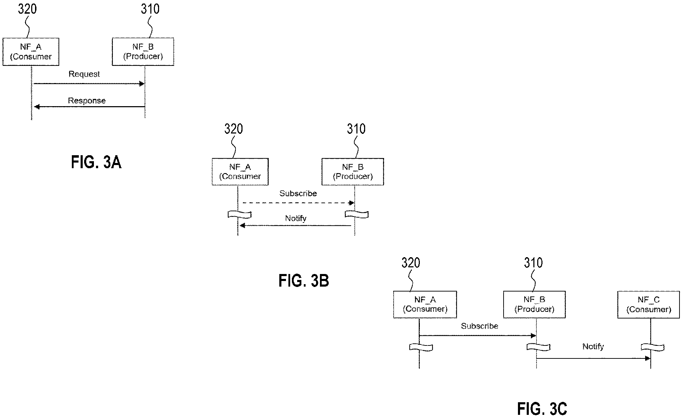

**Fig. 3A** depicts a request-response interaction model within the SBA. In this model, NF_A, acting as a consumer 320, sends a request to NF_B, which acts as a producer 310. The interaction is synchronous, meaning that NF_A initiates the communication and waits for a corresponding response from NF_B before proceeding further.

The request from NF_A may contain specific parameters or instructions for an operation that NF_B is expected to perform. For instance, in the context of a SMF interacting with a PCF, NF_A (SMF) might send a request to NF_B (PCF) to retrieve policy decisions related to a particular session. The request may include details such as the session identifier, Quality of Service (QoS) requirements, and subscriber details. Similarly, if NF_A represents an AMF and NF_B represents a UDM function, the AMF might request subscription data or authentication credentials for a user.

Upon receiving the request, NF_B may process the operation based on the input parameters and its internal logic or data repository. Once the operation is complete, NF_B sends a response back to NF_A. This response may contain the result of the requested operation. For example, if NF_B is a PCF, the response to an SMF's policy request might include approved QoS policies, allowed network slice identifiers, or applicable charging rules. If NF_B is a UDM, the response might include updated user subscription data or the result of an authentication procedure.

The request-response interaction may be well-suited for operations that require immediate feedback or confirmation. For example, when a UE attempts to establish a session, the AMF might request user subscription information from the UDM to verify whether the session request complies with the user's subscription policies. Similarly, during a handover scenario, an SMF might request updated session policies from a PCF to adapt the QoS rules to the new serving cell's capabilities.

**Fig. 3B** illustrates a subscribe-notify interaction model in the context of SBA. In this model, NF_A, labeled as a consumer 320, interacts with NF_B, labeled as a producer 310. The interaction relies on NF_A subscribing to events or updates provided by NF_B and subsequently being notified when these events occur.

A first step in this interaction involves NF_A sending a subscription request to NF_B. This subscription request may specify the events or conditions that NF_A is interested in. For example, NF_A may subscribe to notifications regarding changes in user session states, updates about policy decisions, or resource allocation changes managed by NF_B. NF_B processes the subscription request and registers NF_A as a subscriber if the request is valid and aligns with its supported functionality.

Once the subscription is in place, NF_B may monitor the conditions or events specified in the subscription. When an event occurs that matches the subscription parameters, NF_B may send a notification to NF_A. This notification may include relevant data about the event or the updated state. For instance, in the case of a PCF acting as NF_B and a SMF acting as NF_A, the PCF might notify the SMF of changes to QoS policies for a specific session. Similarly, if NF_B were a NRF, it might notify NF_A about the registration of a new network function or an update to an existing network function's profile.

This interaction model allows the consumer (NF_A) to receive updates asynchronously without the need for continuous polling, reducing unnecessary network signaling and ensuring timely delivery of critical information. For example, in mobility scenarios, if NF_A represents an AMF and NF_B represents a UDM function, the UDM could notify the AMF about updated user subscription data when a user changes their tracking area.

The subscribe-notify model may be useful for event-driven operations, such as triggering handovers, updating policy rules, or adapting resource allocations. This figure highlights how SBA components in 5G networks achieve efficient communication by decoupling subscription and notification events, ensuring that network functions remain informed about relevant changes without constant manual querying. This mechanism supports the dynamic and flexible requirements of modern telecommunication systems.

**Fig. 3C** illustrates an extended subscribe-notify interaction model within the SBA. In this configuration, NF_A acts as a first consumer 320-1, NF_B functions as a producer 310, and NF_C acts as a second consumer 320-2. Unlike the basic subscribe-notify model depicted in Fig. 3B, this figure shows that NF_B not only processes subscriptions from NF_A but also forwards notifications to NF_C. This highlights the concept of indirect notification, where a consumer (NF_A) initiates a subscription but the resulting notifications are directed to another network function, NF_C, based on preconfigured or dynamic conditions.

In this interaction, NF_A sends a subscription request to NF_B, specifying certain events, conditions, or updates of interest. These could include changes in network status, policy updates, or resource availability. However, instead of NF_B notifying NF_A directly when the conditions are met, the notifications may be forwarded to NF_C. This redirection could be based on NF_A's instructions within the subscription or on NF_B's internal logic or policy configurations. For example, NF_A might subscribe to mobility-related events such as UE transitions between tracking areas and designate NF_C, which could represent an AMF, as the recipient of these notifications.

A difference between Fig. 3C and Fig. 3B lies in the separation of subscription and notification endpoints. In Fig. 3B, the consumer subscribing to the updates (NF_A) is the same function receiving the notifications. In Fig. 3C, the subscribing entity (NF_A) delegates the task of receiving the notifications to a different function (NF_C). This may allow greater flexibility in the network, enabling delegation or specialization of tasks among network functions.

For instance, in the context of network slicing, NF_A could be a Network Slice Selection Function (NSSF) subscribing to updates about available resources for specific slices. The notifications about these updates could be directed to NF_C, which could be a PCF responsible for adapting QoS policies for users within the slice. Similarly, NF_A could represent a SMF subscribing to changes in user subscription data stored in a UDM function, with the resulting notifications being directed to NF_C, an AMF managing UE mobility.

This model may be useful in scenarios where the subscribing NF (NF_A) lacks the capability or context to handle notifications directly or when another NF (NF_C) is better suited to process and act upon the updates. It may allow for efficient task delegation and enhances the modularity and adaptability of the network, aligning with the principles of SBA in 5G networks. By decoupling the subscription and notification functions, this model supports more complex workflows and improves network flexibility in handling diverse operational scenarios.

SBA introduces dynamic discovery and selection of NFs/NF Services by means of the NRF. It comprises two aspects: NF profile registration and NF discovery/selection.

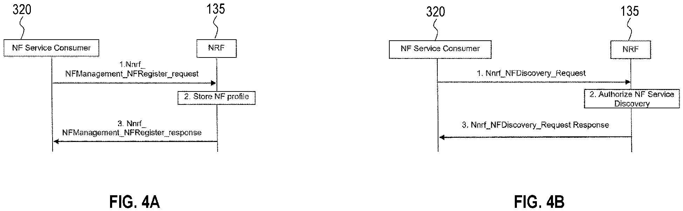

**Fig.4A** illustrates a NF registration process in SBA. This interaction occurs between an NF Service Consumer 320, such as a network function that wants to register itself, and the NRF 135, which acts as a central repository for maintaining network function profiles. The figure depicts three steps involved in the registration process: sending the registration request, storing the NF profile, and receiving the registration response.

In a first step, the NF Service Consumer 320 sends an NFManagement_NFRegister_request message to the NRF 135. This request may include the NF profile, which contains information about the NF, such as its endpoint address, supported services, and operational capabilities. For example, if the NF Service Consumer 320 is a PCF, the profile might detail the supported policies, RESTful APIs (Application Programming Interfaces) for service exposure, and the supported QoS features. This registration request may formalize the introduction of the NF 320 into the SBA, enabling the NRF 135 to track and manage the NF's availability and capabilities.

In a second step, the NRF 135 may process the registration request and store the NF profile in its repository. This may involve validating the information provided by the NF Service Consumer 320 to ensure compliance with 3GPP standards and compatibility with other network functions. For example, if the NF profile specifies certain services, the NRF 135 might cross-check that these services are properly defined and align with the needs of other network functions. Once validated, the profile may be stored in the NRF's database, allowing other network functions to discover and interact with the newly registered NF.

In a third step, the NRF 135 may send an NFManagement_NFRegister_response message back to the NF Service Consumer 320. This response may serve as a confirmation that the registration process has been completed successfully. The response may also include additional information, such as a unique identifier for the NF or details about the services that were successfully registered. For example, if the NF Service Consumer is a SMF, the response might confirm the registration of its endpoints for handling PDU session establishment or management requests.

This registration process may ensure that all network functions within the SBA are discoverable and can interact seamlessly. By maintaining a centralized repository of NF profiles, the NRF 135 may enable efficient communication and service coordination in the 5G network. For instance, when an AMF needs to locate a PCF to retrieve QoS policies, it can query the NRF 135, which provides the endpoint address and supported services of the registered PCF. This reduces manual configuration efforts and ensures that the network can dynamically adapt to changes, such as the addition of new functions or updates to existing ones.

Fig.4B illustrates a NF discovery process in SBA. This process involves a communication exchange between an NF Service Consumer 320, such as a NF that seeks to locate another NF providing a specific service, and the NRF, which acts as the central entity responsible for facilitating service discovery. The figure highlights three steps: initiating the discovery request, authorizing the request, and providing the discovery response.

In a first step, the NF Service Consumer 320 sends an Nnrf_NFDiscovery_Request message to the NRF 135. This request may specify the service or set of services the consumer 320 is seeking, as well as optional filtering parameters to refine the discovery process. For example, if the NF Service Consumer 320 is an AMF, it may send a request to locate a SMF that handles PDU session management. The request could include filters such as supported network slice identifiers, geographical location, or specific QoS requirements.

In a second step, the NRF 135 may process the discovery request by authorizing it. The authorization process may involve validating whether the NF Service Consumer 320 is allowed to perform the requested discovery based on network policies and configurations. For instance, the NRF 135 might check if the AMF has the necessary credentials or permissions to access the profiles of SMFs operating in a particular slice or geographical region. The NRF 135 may ensure that the discovery complies with security and privacy requirements to prevent unauthorized access to network resources.

In a third step, the NRF 135 may send an Nnrf_NFDiscovery_Request Response message back to the NF Service Consumer 320. This response may include the details of candidate network functions that match the discovery request. These details may comprise endpoint addresses, supported services, operational status, and additional attributes such as load capacity or supported frequency bands. For example, if the AMF requests an SMF to handle a PDU session for a specific slice, the response might include the IP address of the SMF, supported protocols like HTTP/2, and details about its current capacity to handle new sessions. Out of the candidates, a target NF (service) may be selected.

The NF discovery process may enable dynamic interaction between network functions, ensuring that the appropriate entities are located efficiently based on real-time network conditions and requirements. For example, in the context of mobility, an AMF might use the discovery process to locate a new SMF when a UE moves into a different slice or geographical region. Similarly, a PCF could use this process to find a UDM function to retrieve user subscription data for enforcing policies.

This process enables the flexible and service-oriented nature of the SBA in 5G networks. By centralizing service discovery through the NRF 135, the network eliminates the need for hard-coded configurations, allowing it to adapt dynamically to changes in topology, service requirements, or the deployment of new functions. The NF discovery mechanism ensures that all core network functions can seamlessly interact, facilitating efficient resource allocation, service delivery, and network scalability.

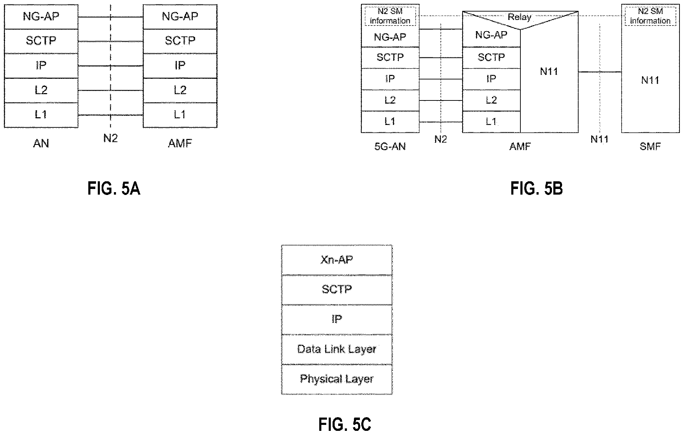

**Fig.5A** illustrates the protocol stack for the N2 interface between the AN 120 and the AMF 132 within the CN 130. This interface is based on a legacy protocol stack and does not use the SBA seen in other 5G network interfaces. Instead, it relies on a more traditional layered structure to facilitate signaling and communication between the RAN 120 and the AMF 132.

At the top of the stack, the NG Application Protocol (NG-AP) is shown. NG-AP is the signaling protocol used for communication between the RAN 120 and the AMF 132. It may manage tasks such as PDU session setup, mobility management, and resource control. For instance, when a UE requests a session, NG-AP is responsible for transmitting the session setup request from the RAN 120 to the AMF 132 and receiving the response with session parameters. NG-AP also handles notifications related to handovers, ensuring seamless transitions between cells managed by different AMFs.

Below NG-AP, the Stream Control Transmission Protocol (SCTP) may provide a reliable transport mechanism for signaling messages. SCTP may ensure ordered delivery of NG-AP messages, which is needed for maintaining consistency in signaling operations. For example, when a series of handover-related messages are exchanged between the RAN 120 and the AMF 132, SCTP may guarantee that these messages are delivered in the correct sequence, preventing errors in handover execution.

The Internet Protocol (IP) layer is depicted beneath SCTP, serving as the network layer for routing packets between the RAN 120 and AMF 132. This layer may ensure that signaling messages are delivered across the network infrastructure, even if the RAN 120 and AMF 132 are located in geographically distant data centers. For instance, in distributed deployments, IP enables communication between a RAN node at the network edge and an AMF located in a centralized cloud data center.

Below the IP layer are the data link (L2) and physical (L1) layers. The L2 layer is responsible for framing, error detection, and retransmission in case of errors, while the L1 layer handles the transmission of bits over the physical medium, such as radio links, optical fiber or Ether-net. Together, these layers may ensure reliable data transmission between the RAN 120 and the AMF 132, forming the foundation for higher-layer protocols.

Fig. 5A highlights the legacy nature of the N2 interface, where the protocol stack relies on a tightly integrated design rather than the modular and flexible approach of SBA. This legacy design is suited for the real-time and highly reliable signaling requirements of interfaces like N2, which support critical functions such as session management and mobility control.

For example, when a UE moves from one cell to another, the RAN 120 may use the N2 interface to communicate with the AMF 132 and execute handover procedures. During this process, NG-AP signals the AMF about the handover request, SCTP ensures reliable delivery of the signaling messages, and the lower layers provide transport for the messages across the physical network infrastructure.

**Fig.5B** extends the concept shown in Fig. 5A by illustrating a more complex interaction involving the N2 and N11 interfaces. It highlights the role of the AMF as a central relay between the 5G Access Network (5G-AN) and the SMF. Unlike Fig. 5A, which focuses solely on the communication between the RAN 120 and AMF 132 over the N2 interface, this figure introduces the N11 interface, showing how signaling information may be relayed from the RAN 120 to the SMF 136 via the AMF 132.

A difference is the addition of the N2 Session Management (SM) information, which originates at the 5G-AN and is transmitted to the AMF 132 over the N2 interface using the NG Application Protocol (NG-AP). The AMF 132 processes the N2 SM information and relays it to the SMF 136 over the N11 interface. This relay function enables the coordination between mobility management (handled by the AMF 132) and session management (handled by the SMF 136). For example, when a UE initiates a PDU session, the 5G-AN may send the session establishment request as N2 SM information to the AMF 132. The AMF 132, acting as an intermediary, may forward the relevant session details to the SMF 136 using N11 signaling.

Another difference lies in the relay mechanism depicted in the AMF 132. The AMF 132 does not just terminate the N2 signaling; it processes and passes key information to the SMF 136. This architecture enables the separation of responsibilities, where the AMF 132 focuses on mobility-related tasks while the SMF 136 handles the session-related aspects. For instance, during a handover, the AMF 132 may update the SMF 136 about the change in the UE's location, ensuring that the session remains active and consistent across different cells.

Fig.5B also emphasizes the modularity of the 5G architecture, where specific interfaces like N2 and N11 are tailored for distinct functions. The N2 interface is optimized for real-time signaling between the RAN 120 and AMF 132, while the N11 interface is used for communication between the AMF 132 and SMF 136, supporting tasks like session establishment, modification, and release. For example, if the SMF 136 needs to adjust the QoS parameters of an ongoing session based on a policy update, it relies on the AMF 132 to relay this information back to the 5G-AN over N2.

**Fig.5C** illustrates the protocol stack for the Xn interface, which is used for control plane (CP) communication between two gNBs (Next-Generation NodeBs) in a 5G network, as specified in 3GPP TS 38.423. The Xn interface facilitates coordination between neighboring gNBs, enabling functions such as mobility management, handover signaling, and resource coordination. The stack comprises five layers, from the application layer (Xn-AP) to the physical layer.

At the top of the stack is the Xn Application Protocol (Xn-AP). Xn-AP is responsible for handling signaling messages exchanged between gNBs to coordinate mobility and optimize resource utilization. For example, during a UE handover between two gNBs, the source gNB uses Xn-AP to communicate with the target gNB, providing information about the UE's context, such as its security keys, QoS parameters, and PDU session details. This may ensure that the target gNB can continue the UE's sessions seamlessly. Additionally, Xn-AP supports load balancing by allowing gNBs to exchange load information and adjust resource allocation dynamically.

Below Xn-AP is the SCTP, which may ensure reliable transport of signaling messages. SCTP provides message-oriented delivery with features such as multistreaming and multi-homing, which are needed for maintaining robustness and reliability in gNB communication. For instance, if one transport path between two gNBs fails, SCTP can reroute signaling traffic through an alternate path without interrupting the ongoing handover or coordination process.

The IP layer is shown below SCTP, serving as the network layer for routing packets between gNBs. The IP layer may enable gNBs to communicate across different subnets and geographical locations by assigning unique IP addresses to each node. For example, in a distributed deployment, gNBs located in separate regions use the IP layer to establish connectivity over a wide-area network.

The data link layer ensures that signaling messages are framed correctly and delivered over the physical medium with error detection and retransmission capabilities. This layer provides logical links for data exchange, ensuring that higher-layer protocols like Xn-AP operate without disruptions caused by errors in the underlying transmission.

The physical layer is responsible for the actual transmission of bits over the communication medium, which could be fiber optic cables, microwave links, or other physical connections. The physical layer ensures that the raw data is transmitted reliably, providing the foundation for all upper-layer protocols.

The Xn protocol stack shown in Fig.5C is similar to the NG interface stack used between the gNB and the AMF in the core network. A difference lies in the application protocol at the top layer. While Xn-AP is specifically designed for gNB-to-gNB communication, NG-AP is tailored for gNB-to-AMF interactions. For example, Xn-AP supports inter-gNB handovers by facilitating direct signaling between the source and target gNBs, whereas NG-AP supports the establishment of new sessions or updates to mobility management data between the gNB and the core network.

There are various configuration transfer and update procedures in 5G networks, focusing on interactions between the NG-RAN (Next-Generation Radio Access Network) nodes and the AMF 132. The procedures may enable an exchange of configuration and management information required to maintain seamless communication, optimize network operations, and ensure interoperability within the 5G system. Some example processes are Uplink RAN Configuration Transfer, Downlink RAN Configuration Transfer, and AMF Configuration Update.

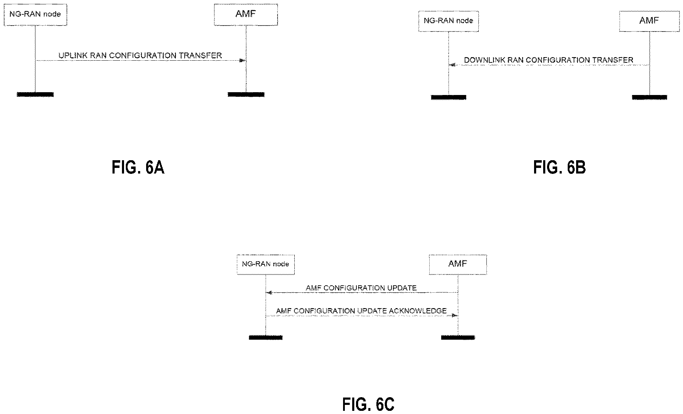

The Uplink RAN Configuration Transfer process **(****Fig. 6A****)** may be initiated by a NG-RAN node to send RAN configuration information to the AMF 132. The purpose may be to provide Self-Organizing Network (SON) information, enabling the AMF 132 to transfer this data to the appropriate target RAN node or core network element. For instance, if the NG-RAN node includes a SON Configuration Transfer Information Element (IE) in the transfer message, the AMF 132 may forward this information to a target RAN node identified by the Node ID IE. In cases where Inter-system SON Configuration Transfer IE is received, the AMF 132 may relay the data to the Mobility Management Entity (MME) associated with the indicated eNB (Evolved NodeB). This may enable efficient communication and coordination across both 5G and legacy networks.

The Downlink RAN Configuration Transfer process **(****Fig. 6B****)** works in the reverse direction, with the AMF 132 sending configuration information to the NG-RAN node. This information can include SON data, SCTP (Stream Control Transmission Protocol) endpoint details, or GTP (GPRS Tunneling Protocol) endpoint information. For example, the NG-RAN node may use SON Information lEs to establish Xn interfaces for inter-gNB communication, configure ACL (Access Control List) functionalities, or set up secure tunnels for data transfer using IPsec. Additionally, the NG-RAN node may respond to a SON Information Request by initiating an Uplink RAN Configuration Transfer procedure, creating a two-way flow of information. In scenarios where secure transport is required, the NG-RAN node may use IPsec tunnels to protect SCTP and/or GTP (e.g. GTP-C and/or GTP-U) traffic between nodes.

The AMF Configuration Update procedure **(****Fig. 6C****)** allows the AMF 132 to provide the NG-RAN node with updated configuration data. This includes modifications to SCTP associations, PLMN (Public Land Mobile Network) support, and load information. For example, the AMF 132 may send a message containing a PLMN Support List IE to overwrite the supported PLMN identities and associated AMF slice configurations. If necessary, the AMF 132 can instruct the NG-RAN node to add, update, or remove Transport Network Layer (TNL) associations. For instance, a TNL Association to Add List IE might direct the NG-RAN node to establish connections to new endpoints, while a TNL Association to Remove List IE facilitates the deletion of outdated associations. The NG-RAN node responds to these instructions by acknowledging the updates, reporting successful or failed associations as required.

The AMF Configuration Update process also supports enhancements in network slice selection and AMF management by providing updated GUAMI (Globally Unique AMF Identifier) lists, relative AMF capacity values, and supported slice details. In scenarios involving Standalone Non-Public Networks (SNPNs), the NG-RAN node may use information such as NPN Support IEs and Onboarding Support IEs to determine if the AMF can manage UE onboarding for private networks.

These configuration procedures may collectively ensure that 5G networks maintain interoperability and operational efficiency across various interfaces, including NG-C and Xn. For example, during a handover between gNBs 122, the AMF 132 can leverage configuration updates and RAN transfers to ensure that session continuity is maintained and that secure tunnels are established dynamically. Similarly, SON-related information exchanges may allow the network to optimize resource allocation and self-configure based on real-time conditions.

There are various procedures and functionalities within 5G networks, focusing on AMF endpoint discovery, handover processes, Radio Resource Management (RRM), and neighbor cell relation management. These elements play a role in ensuring seamless mobility, efficient resource allocation, and reliable interconnectivity between network nodes in a 5G system. The procedures are based on 3GPP standards and are fundamental to the operation of next-generation mobile networks.

To retrieve or discover AMF endpoint information, a gNB needs to be pre-configured with an initial AMF SCTP endpoint during a bootstrapping process. Once the SCTP connection is established, the gNB may receive detailed AMF information through an NG SETUP Response message. This initial configuration may enable the gNB to communicate with the AMF 132. When the gNB needs to contact additional AMFs, it may use a Global Unique AMF Identifier (GUAMI) to construct a Fully Qualified Domain Name (FQDN), as specified by 3GPP. For example, during a mobility event where a UE 110 transitions to a different network slice managed by another AMF 132, the gNB may use this process to locate the new AMF.

The handover process enables seamless transitions for a UE 110 between two gNBs. It is based on measurements performed by the UE 110 and gNB 122, including beam quality and cell quality assessments. In RRC_CONNECTED mode, the UE 110 may evaluate multiple beams within a cell and averages their signal strengths to derive the cell quality. This process may involve filtering at the physical layer for beam quality and at the RRC layer for cell quality. Measurement reports, which include details about the X best beams, are sent to the gNB 122 for handover decisions. For example, if a UE 110 moves closer to a neighboring cell with better signal strength, the serving gNB may coordinate with the target gNB to execute the handover. The handover decision may be informed by RRM information, which optimizes the use of radio resources and ensures service continuity during mobility.

RRM is essential for managing radio resources in both idle and connected modes. It may ensure that NR (New Radio) meets specific radio resource-related requirements, such as cell reselection algorithms, UE measurement and reporting configurations, and inter-RAT (Radio Access Technology) mobility. For instance, in idle mode, the UE 110 may select the best available cell based on thresholds and hysteresis values configured by the network. In connected mode, handovers are supported using gNB or UE measurements. The RRM process also includes inter-frequency and inter-RAT mobility, allowing UEs to transition seamlessly between different frequency bands or technologies, such as between 5G and LTE, even in non-overlapping frequency scenarios.

The Automatic Neighbor Cell Relation Function (ANRF) is needed for managing neighbor relations between cells. In intra-system ANRF, the gNB may use UE measurements to maintain neighbor cell relations, while in inter-system ANRF, measurements may be triggered by specific requests from cells. This information may be exchanged between gNBs via the Xn interface or through operations and management (OAM) systems. For instance, the Xn-AP protocol includes Information Elements (IEs) to share neighbor cell information, such as neighbor cell IDs and configurations. When a gNB needs to establish an Xn connection with another gNB, it may query the AMF 132 to resolve the SCTP endpoint information for the target gNB.

ISAC (Integrated Sensing and Communication) is a feature being currently pushed in the context of 6G. ISAC refers to the integration of wireless communication and radar sensing into a unified system. Traditionally, communication systems and sensing systems, such as radar or LiDAR, have operated independently. However, ISAC seeks to merge these functionalities, enabling a single system to simultaneously provide high-speed data transmission and environmental sensing.

In ISAC, the same wireless signals used for communication may also be leveraged for sensing tasks, such as object detection, motion tracking, or environmental mapping. For example, a base station in a 6G network could transmit signals to deliver data to a user device while also using the reflections of those signals to detect the location and speed of nearby objects. This dual functionality may reduce hardware and spectrum usage by eliminating the need for separate systems, making ISAC a highly efficient approach.

ISAC is seen as an enabler for advanced applications in 6G networks, including autonomous vehicles, smart cities, and augmented reality (AR). It could enhance situational awareness for drones, improve safety in transportation by detecting potential collisions, and enable precise localization and tracking in indoor environments. By integrating communication and sensing, ISAC is expected to play a role in the evolution of wireless technologies and the realization of new services in 6G networks.

While current procedures based on the NG-AP and Xn-AP protocols function as intended, they do not provide an efficient or straightforward means for addressing several critical aspects of modern network requirements. These procedures lack mechanisms to combine information obtained from a central capability repository with UE-based measurements to enhance mobility. They also do not support the direct propagation of information between NG-RAN nodes, making inter-node communication less efficient. Furthermore, there is no standardized or simplified process for the discovery and selection of AMFs by NG-RAN nodes or for the discovery and selection of NG-RAN nodes by other network functions based on RAN capabilities, such as Integrated Sensing and Communication (ISAC).

Current protocols do not enable the automatic configuration of service endpoints based on the required capabilities of the system. Additionally, they lack the ability to subscribe to events using filters, such as filtering information based on the load of a cell. These shortcomings may result in inefficiencies and limit the flexibility of network deployments.

The state-of-the-art solutions face specific challenges. SCTP-based communication is difficult to deploy effectively in cloud-based environments, which are increasingly integral to modern network architectures. Moreover, using the AMF 132 to resolve cell identities to endpoints introduces unnecessary complexity, as this task is unrelated to mobility management, which is the primary function of the AMF. This mixing of functionalities in the AMF further complicates its scaling because unrelated functionalities are bundled together. A modular design with clearly defined responsibilities for each network function would facilitate better scaling. Since AMF association is UE-dependent, UE-related functionality and RAN-related functionality are mixed. In a scenario where different UEs necessitate of different AMFs (e.g. due to slicing), the gNB may potentially have different resolution scopes (i.e. AMFs it could ask) for resolving cell and/or neighbor information. Hence, current solutions do not allow to decouple the UE-CN association, especially the UE-AMF association, from RAN topology.

There is also no defined mechanism for caching endpoint information related to AMFs or gNBs, especially for controlled caching, leading to inefficiencies in repeated endpoint resolution tasks. The reliance on the AMF for all exchanges of endpoint information introduces a topological restriction, forcing deployments to depend on a centralized node for a function that could otherwise be distributed or handled more flexibly. This topological dependency unnecessarily limits the ways in which the network can be deployed and managed.

The current protocols lack a mechanism for granular authorization of endpoint resolution information, which would allow fine-grained control over who can access specific pieces of information. This absence raises security and privacy concerns, as it is not possible to restrict access to sensitive data based on the entity requesting it. Furthermore, the SCTP-based NG-AP protocol does not adequately differentiate between gNBs with vastly different capabilities. For instance, it cannot distinguish between a gNB supporting eMBB (enhanced Mobile Broadband) communication and another gNB designed exclusively for ISAC, which is not intended for communication purposes. This inability to distinguish capabilities limits the efficient and appropriate selection of nodes for specific tasks.

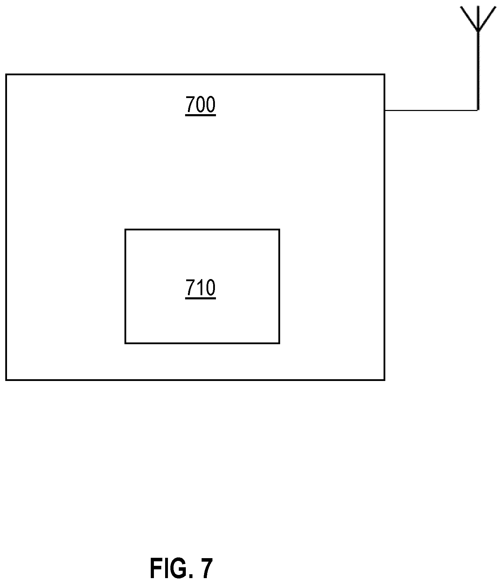

The present disclosure proposes to overcome the limitations of current solutions by providing a RAN node for a telecommunication network that is capable of addressing the outlined challenges. **Fig. 7** shows a schematic block diagram of the proposed RAN node 700.

A RAN node is a key component of a telecommunication network that may connect user devices, such as smartphones and loT devices, to the CN 130. It may facilitate wireless communication by managing the radio interface and enabling the exchange of data and signaling between the UE 110 and the CN 130. RAN nodes play a role in tasks such as mobility management, resource allocation, and QoS enforcement, ensuring efficient and reliable network operations. In modern networks like 5G, examples of RAN nodes include gNBs (Next-Generation NodeBs) for 5G New Radio (NR) and eNBs (Evolved NodeBs) for LTE.

RAN node 700 may comprise both hardware and software components designed to handle the high-performance demands of wireless communication. On the hardware side, RAN node 700 may include a Central Processing Unit (CPU) to handle general-purpose tasks, such as executing control algorithms and managing network protocols. The CPU may be complemented by Digital Signal Processors (DSPs) and Application-Specific Integrated Circuits (ASICs), which may be optimized for computationally intensive operations like modulation, demodulation, encoding, and decoding. Field-Programmable Gate Arrays (FPGAs) may also be used to provide flexibility and low-latency processing for tasks such as beamforming and fast Fourier transforms (FFT). Additionally, the hardware of RAN node 700 may include a network interface card (NIC) for establishing high-speed connections with the CN 130 and other RAN nodes, and radio frequency (RF) transceivers to convert baseband signals to RF signals for transmission and vice versa. The transceivers may support multiple frequency bands and radio access technologies, enabling the RAN node 700 to operate in diverse network environments. The node may also be equipped with memory, such as RAM for real-time data processing and storage devices for maintaining configuration files, logs, and software.

Software components of RAN node 700 may include a real-time operating system (RTOS) to ensure deterministic execution of latency-sensitive tasks. Protocol stack software may implement key network functions across multiple layers, such as the Medium Access Control (MAC), Radio Link Control (RLC), Packet Data Convergence Protocol (PDCP), and Radio Resource Control (RRC) layers. These layers may manage data flow, error correction, and signaling, enabling the node to handle mobility, establish sessions, and maintain connections with UEs and other network elements.

Service-based software interfaces may also be a component of RAN node 700, particularly in 5G networks. These interfaces may facilitate interaction with core network functions, such as the AMF 132 and the SMF 136, via SBA APIs. In addition, RAN nodes may include artificial intelligence and machine learning modules for optimizing network operations, such as adaptive resource allocation and anomaly detection.

RAN node 700 comprises processing circuitry 710 that is configured to register the RAN node 700 with an NRF 135. The processing circuitry 710 in the RAN node 700 may be implemented using the hardware and software components previously described for the RAN node. It may include high-performance multi-core processors or System-on-Chip (SoC) designs to handle signaling tasks like constructing and sending registration requests to the NRF 135. Programmable hardware such as FPGAs can be used to dynamically adapt to registration procedures, while embedded software may implement standardized SBI protocols.

The registration process may involve the RAN node 700 introducing itself to the NRF 135 by providing a comprehensive profile that describes its capabilities and configurations. This profile enables the NRF 135 to store, manage, and use this information to facilitate the discovery of the RAN node 700 by other network entities. Registration may establish the RAN node 700 as an active and discoverable component of the telecommunication network.

The registration process may begin with the processing circuitry 710 preparing a registration request. This request contains the RAN profile. The RAN node 700 may communicate this request to the NRF 135 using a SBI protocol, typically implemented as RESTful HTTP APIs. For example, the RAN node 700 might use the NFManagement_NFRegister API to send its profile to the NRF 135.

The NRF 135 may validate the received RAN profile to ensure it aligns with network policies and is in a format compatible with its database. Once validated, the NRF 135 may store the RAN profile and assign a unique identifier to the RAN node 700. This identifier may be used for subsequent interactions, including updates to the RAN profile and responses to discovery queries. The NRF 135 may send a registration response to the RAN node 700, confirming the successful completion of the process and providing any additional network-related details necessary for the node's operation.

Additionally, the registration process may support dynamic updates, where the processing circuitry 710 may modify the RAN profile over time to reflect changes in its capabilities or configurations. For instance, if the RAN node 700 gains additional frequency band support or updates its energy efficiency metrics, it may send an updated profile to the NRF 135. The NRF 135 may process this update to ensure its records remain current, improving the accuracy of network function discovery.

By providing a structured and standardized registration mechanism, the processing circuitry 710 may enable that the RAN node 700 is fully integrated into the telecommunication network. This integration enables seamless discovery, efficient task coordination, and optimal resource utilization across the network. The ability to dynamically update the profile may ensure that the RAN node 700 remains relevant and aligned with the evolving requirements of the 5G ecosystem.

During the registration process, the RAN node 700 may provide the RAN profile that includes parameters indicative of the RAN node's capabilities and/or configurations. These parameters may represent the technical characteristics, supported functionalities, and operational configurations of the RAN node 700, which allow the network to understand the node's role and suitability for specific tasks. These parameters may enable efficient discovery, communication, and interoperability with other RAN or core network nodes.

The RAN profile may include parameters related to supported RATs and/or RAT types, such as LTE, 5G NR, GEO, MEO, LEO, or ISAC. It may also specify frequency bands the RAN node 700 supports, which defines the spectral range within which it can operate. Additional parameters may include energy efficiency metrics, describing the power consumption characteristics of the node 700, and geographical or signal-based location information, indicating the node's coverage area or position relative to other nodes. Parameters describing the load or traffic-handling capacity of the RAN node 700 may also be included, providing insights into its ability to handle varying network demands.

More specifically, the RAN profile may include parameters such as tracking area identifiers (TAls) associated with the RAN node 700, which may help define the geographical regions the RAN node 700 serves. It may also provide cell-level details, such as Physical Cell Identifiers (PCIs) or Global Cell Identifiers (GCls), which are needed for mobility management and handover procedures. Subscription-related parameters, such as identifiers of supported subscription types, may describe whether the RAN node 700 supports individual, group, or specific enterprise subscriptions. The profile could also specify service identifiers that highlight particular functionalities offered by the RAN node 700, such as support for ultra-reliable low-latency communication (URLLC), enhanced mobile broadband (eMBB), or machine-type communication.

More specifically, the RAN profile may include technical details such as endpoint addresses for communication, supported communication protocols, and configurations for network slicing. For instance, endpoint addresses may include IP addresses or FQDNs used for establishing secure connections. Supported protocols, such as NG-AP or Xn-AP, describe how the RAN node 700 interacts with other network entities. The profile may also contain configurations for Access Control Lists (ACLs) and secure tunnels, such as IPsec, which define how the node manages secure traffic flows.

By providing this detailed set of parameters, the RAN profile may enable that the node integrates seamlessly into the network, allowing the NRF 135 to facilitate efficient discovery and coordination with other network elements. This description may enable the RAN node 700 to dynamically interact with the network, adapt to changing requirements, and deliver optimal performance across a wide range of telecommunication scenarios.

The processing circuitry 710 is also configured to query the NRF 135 using the parameters included in the RAN profile to obtain information about other RAN or CN nodes. These queries allow the RAN node 700 to dynamically discover network entities with specific capabilities or configurations that align with its operational needs. This process may enable efficient interaction with compatible nodes while supporting network-wide coordination and scalability.

The query may include broad criteria such as the type of node being sought, such as RAN nodes or specific CN functions like the AMF 132 or SMF 136. The query may also specify the required capabilities of the target nodes, such as support for particular RATs like LTE or 5G NR, or the ability to handle specialized services like URLLC or ISAC. The query may include operational configurations, such as the target node's support for specific network slices, defined by slice identifiers or QoS requirements.

More specifically, the query may include detailed parameters derived from the RAN profile. These parameters could specify frequency bands supported by the target nodes, ensuring compatibility for inter-node communication or handovers. Geographical criteria, such as proximity to a specific location or coverage area, may be included to refine the results to nodes that are most relevant to the RAN node's 700 operating region. The query may also include performance metrics, such as load thresholds or energy efficiency requirements, to ensure that selected nodes are capable of handling the current or anticipated network demands.

More specifically, the query can incorporate identifiers such as Global Unique AMF Identifiers (GUAMIs) to locate specific AMFs or PCIs and GCls to identify neighboring RAN nodes. Some embodiments may include filtering criteria based on event subscriptions, such as querying for nodes that have recently updated their profiles or have reported changes in their configurations. The query may also specify transport requirements, such as endpoint addresses that support secure communication protocols like IPsec or SCTP, or criteria for selecting nodes with pre-established ACL configurations.

This may enable the RAN node 700 to effectively discover and select network functions or other RAN nodes tailored to its operational requirements. For example, during a handover scenario, the RAN node 700 could query for neighboring RAN nodes with adequate load capacity and compatible QoS settings to ensure seamless mobility. Similarly, when initiating a new PDU session, the RAN node 700 might query for SMFs with support for specific network slices and geographical coverage. By leveraging detailed and flexible query mechanisms, the RAN node 700 may enhance its ability to dynamically adapt to network conditions, optimize resource utilization, and maintain high-quality service delivery.

Furthermore, the processing circuitry 710 is configured to establish communication with other RAN or CN nodes based on the information obtained from the NRF 135. This may involve leveraging the capabilities and endpoint details of the discovered nodes to initiate and maintain secure, reliable, and contextually appropriate communication. The purpose of this communication is to enable coordinated operations such as mobility management, session establishment, and resource sharing between the RAN node 700 and its network counterparts.

The RAN node 700 may establish communication by using endpoint information provided by the NRF 135, such as IP addresses, FQDNs, or transport layer identifiers. Depending on the type of target node, the RAN node 700 may select an appropriate protocol stack for the interaction. For communication with CN nodes, such as the AMF 135 or SMF 136, the processing circuitry 710 may use the NG-AP over the N2 or N11 interfaces. For instance, the RAN node may use NG-AP messages to initiate PDU session setup with the SMF 136 or to exchange mobility-related information with the AMF 135 during a handover. For communication with other RAN nodes, Xn-AP may be employed over the Xn interface to coordinate tasks such as inter-gNB handovers or load balancing.

More specifically, communication can involve the establishment of secure transport layer connections, such as SCTP or IPsec tunnels, to ensure data integrity and confidentiality. For example, when interacting with a neighboring gNB, the processing circuitry 710 may use endpoint addresses obtained from the NRF 135 to initiate an SCTP association, allowing the exchange of Xn-AP signaling messages for mobility management. If secure communication is required, the RAN node 700 can set up an IPsec tunnel to protect signaling traffic, such as SON configuration transfers between RAN nodes.

More specifically, the RAN node 700 may use specific capabilities provided by the target nodes to optimize communication. For instance, if the NRF 135 indicates that a neighboring RAN node supports ISAC, the processing circuitry 710 may establish a connection to coordinate sensing data along with communication tasks. Similarly, when initiating a new session with an SMF, the RAN node 700 may use slice-specific details from the NRF 135 to select the appropriate endpoint, ensuring the session aligns with network slicing policies. Event-based communication may also be established, where the RAN node subscribes to updates from other nodes or sends targeted queries based on the context provided by the NRF.

By dynamically selecting the appropriate communication protocols, transport mechanisms, and security measures, the processing circuitry 710 may enable that the RAN node 700 integrates seamlessly with other network entities. This capability may enable efficient task coordination, robust mobility support, and secure data exchange, all of which are needed for maintaining high-performance telecommunication networks.

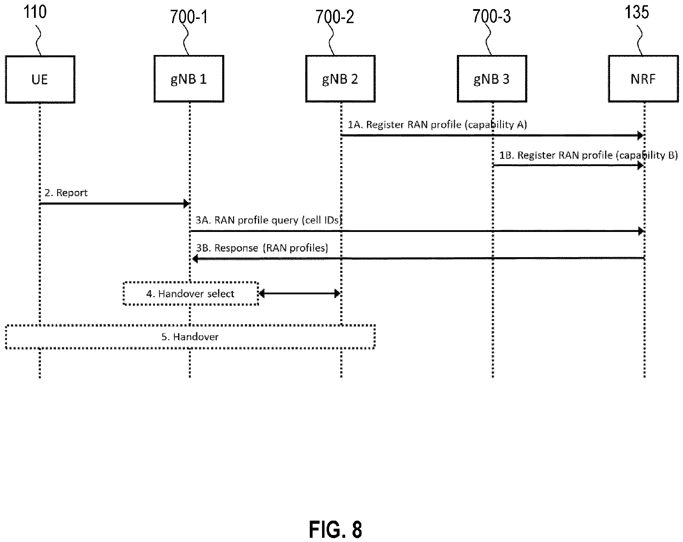

**Fig. 8** illustrates an enhanced mobility procedure using RAN profile information stored in the NRF 135. It shows how a UE 110 communicates with a source gNB 1 700-1, and how the source gNB 700-1 interacts with the NRF 135 and other gNB 2 700-2 and gNB 3 700-3 to improve handover decisions by leveraging RAN profile data. The procedure may reduce dependency on the CN, enhance flexibility, and allow for more informed and efficient mobility management.

The entities shown in Fig. 8 include the UE 110, which may perform measurements of its radio environment and report the results to its serving gNB 1 700-1. The gNB 1 700-1 acts as the source gNB in this procedure, receiving the report from the UE 110 and initiating the query to the NRF 135 for target gNBs. The target gNBs are represented as gNB 2 700-2 and gNB 3 700-3, which have already registered their RAN profiles with the NRF (step 1A and 1B). The NRF 135 serves as a centralized repository that stores detailed RAN profiles and facilitates the discovery of gNBs and their capabilities.

The procedure begins with step 1, where gNB 2 700-2 and gNB 3 700-3 register their respective RAN profiles with the NRF 135. These profiles may include detailed information such as the gNBs' capabilities, configurations, supported services, load levels, and endpoint addresses. For example, gNB 2 700-2 might register that it supports URLLC services, operates in a specific frequency band, and has high energy efficiency metrics. Similarly, gNB 3 700-3 might register its GPU capabilities for edge computing and indicate its geographical location.

In step 2, the UE 110 sends a report to its serving gNB 1, 700-1. This report may include measurement results, such as a signal strength of neighboring cells, represented by their cell IDs. For instance, the UE 110 might report cell IDs corresponding to gNB 2 and gNB 3, which are visible to the UE 110 but may lack other contextual details like load levels or specific capabilities.

In step 3A, gNB 1 700-1 queries the NRF 135 using the cell IDs reported by the UE 110 to retrieve the corresponding RAN profiles. The query can be further refined using additional parameters. For example, gNB 1 700-1 might query for gNBs that are geographically close to the reported cell IDs or for gNBs with low load levels, such as minimal traffic or RACH (Random Access Channel) utilization. The query might also specify additional filters, such as only returning gNBs that operate in a specific frequency band or that support specialized services like edge computing or energy-efficient operation.

In step 3B, the NRF 135 responds to gNB 1 700-1 with a list of potential target gNBs that match the query criteria. This response includes the RAN profiles of gNB 2 700-2 and gNB 3 700-3, providing information such as endpoint addresses, supported protocols, load conditions, energy efficiency metrics, and service capabilities. For example, the NRF 135 might indicate that gNB 2 700-2 supports URLLC with a moderate load level, while gNB 3 700-3 offers higher energy efficiency but does not support low-latency services.

In step 4, gNB 1 700-1 evaluates the RAN profiles returned by the NRF 135 and selects the most suitable target gNB for the handover. This decision is based on the enhanced information now available, such as load levels, capabilities, and energy efficiency. For instance, if gNB 2 700-2 has sufficient capacity and supports URLLC, gNB 1 700-1 might prioritize it for the handover. Alternatively, if energy efficiency is a critical factor, gNB 3 700-3 might be chosen instead.

In step 5, the actual handover procedure is initiated, which may follow the same process as current handover mechanisms. This involves the source gNB transferring the UE's 110 context to the selected target gNB and facilitating the UE's transition to the new cell.

The enhanced mobility procedure depicted in Fig. 8 may allow for a more informed and flexible handover process. Furthermore, it allows the visibility of gNBs to be centrally managed, instead of having it managed in a distributed fashion by multiple AMFs. Hence, RAN network topology can be flexibly and efficiently managed. By querying the NRF directly, gNB 1 may bypass the need to involve the AMF 132 for endpoint resolution, reducing delays and dependency on the CN 130. This method may also enable the source gNB 700-1 to consider multiple target gNBs and select the best option based on comprehensive RAN profile data, improving efficiency, scalability, and adaptability in the network. For example, in scenarios involving high-density deployments or specialized service requirements, this approach ensures that handovers align with both the UE's needs and network conditions.

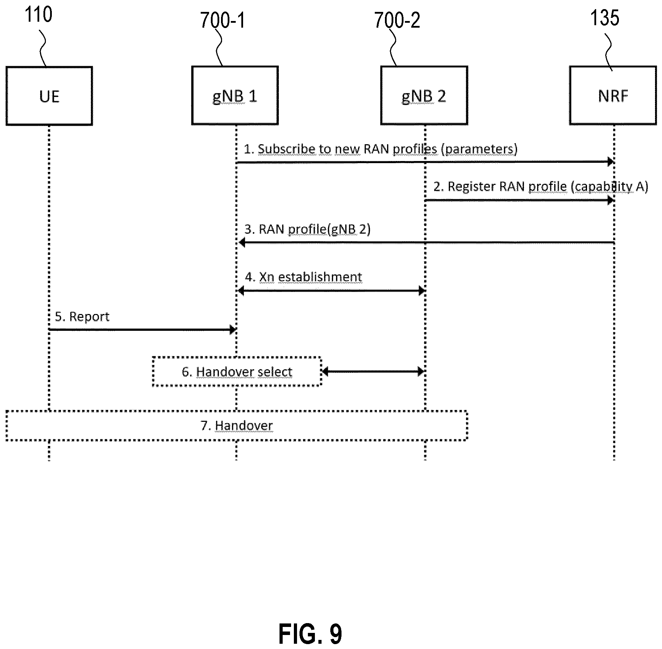

**Fig. 9** illustrates an enhanced method for provisioning Xn connectivity between gNBs by leveraging the subscription and notification functionality of the NRF 135. This approach may improve the efficiency of Xn link establishment and handover operations by allowing gNBs to proactively subscribe to updates about relevant RAN profiles, reducing delays and reliance on reactive queries during critical operations. The entities involved include the UE 110, gNB 1 700-1 as the source gNB, gNB 2 700-2 as a potential target gNB, and the NRF 135 as the centralized repository managing RAN profiles.

In step 1, gNB 1 700-1 subscribes to the NRF 135 to receive notifications about updates or registrations of RAN profiles. This subscription may include parameters that define the conditions under which gNB 1 700-1 should be notified. For example, gNB 1 700-1 may subscribe to receive updates about RAN nodes within a specific geographical area, within a certain pathloss range, or operating on specific frequency bands. Additionally, gNB 1 700-1 may request notifications for RAN nodes that support particular capabilities, such as ultra-reliable low-latency communication (URLLC) or enhanced energy efficiency.

In step 2, gNB 2 700-2 registers its RAN profile with the NRF 135. The RAN profile may include detailed information about gNB 2's capabilities, configurations, and operational attributes. For instance, the profile may specify that gNB 2 700-2 supports certain frequencies, has low load levels, or operates within a defined geographical area. This information is stored in the NRF 135 and becomes available for discovery or notification processes.

In step 3, the NRF 135 matches the information in gNB 2's 700-2 RAN profile with the subscription criteria set by gNB 1 700-1. Since gNB 2's RAN profile fulfills the conditions specified by gNB 1-such as proximity, capability, or frequency range-the NRF 135 may send a notification to gNB 1 700-1. This notification may include gNB 2's RAN profile, providing gNB 1 with the necessary details to establish communication with gNB 2.

In step 4, based on the received RAN profile information, gNB 1 700-1 may initiate the establishment of an Xn interface with gNB 2 700-2. The Xn link may enable direct communication between the two gNBs for tasks such as inter-gNB handovers or load balancing. This proactive Xn establishment may allow the link to be set up well before any UE-triggered events, such as mobility reports, reducing delays and overhead during critical operations.

In step 5, the UE 110 sends a report to gNB 1. This report may include measurement data, such as the signal strengths of nearby cells. However, unlike traditional methods, the enhanced approach depicted here means that the Xn link with gNB 2 may already be established at this stage, significantly speeding up subsequent processes.

In step 6, gNB 1 700-1 may use the information from the UE report, combined with the previously received RAN profile details, to select gNB 2 700-2 as the handover target. The enriched data available from the proactive subscription process enables gNB 1 700-1 to make an informed decision based on both UE-provided metrics and detailed network-level information.

In step 7, the handover procedure is executed. The UE 110 transitions from gNB 1 to gNB 2, with the Xn interface facilitating the seamless transfer of UE context and traffic between the two nodes.

This approach may offer multiple advantages. By proactively subscribing to updates about relevant RAN nodes, gNB 1 700-1 may reduce the need for reactive queries and cell ID resolution during handover. For example, instead of querying the NRF 135 after receiving a UE report, gNB 1 700-1 already has the necessary information and an established Xn link, allowing for faster handover execution. The proactive nature of this method may also reduce signaling overhead in the network, as fewer queries are required at critical moments. Additionally, this separation of responsibilities may allow the NRF 135 to handle profile management and notification tasks, freeing the core network (e.g., AMF) from maintaining endpoint information for RAN elements. This approach may thus enhance scalability, flexibility, and performance in modern telecommunication networks.

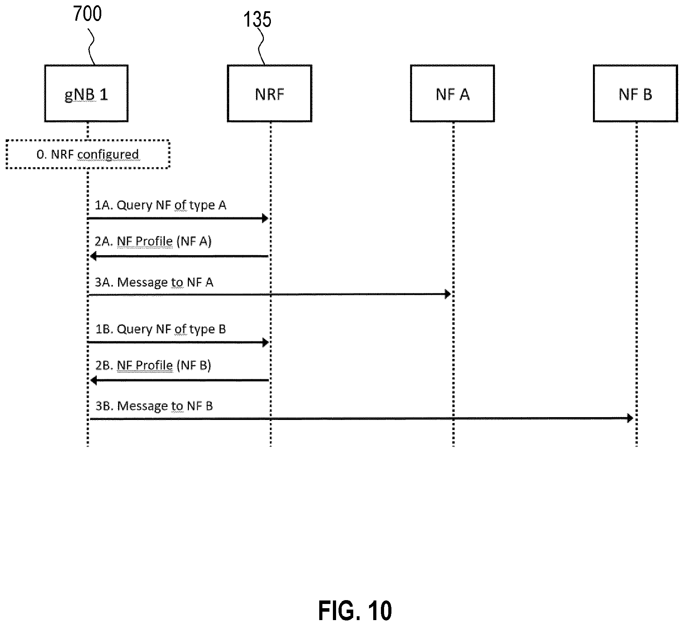

**Fig. 10** illustrates an NRF-based bootstrapping process for RAN-to-CN communication, showing how gNB 1 700 can interact with NRF 135 to discover and communicate with CN entities, such as NF A and NF B. This approach extends beyond traditional AMF-based interaction by allowing the gNB to discover a broader range of NFs through the NRF 135. This capability may be particularly useful for services such as ISAC that may rely on non-AMF NFs.

The first entity, gNB 1 700, represents a RAN node that requires access to specific CN entities to fulfill its operational tasks, such as mobility management, session setup, or specialized services like ISAC. The NRF 135 acts as a centralized repository that stores profiles of various NFs in the network, enabling their discovery and selection. NF A and NF B represent two types of CN entities that the gNB may need to interact with, such as an AMF for mobility management or a service-specific NF related to ISAC or edge computing.

In step 0, the gNB 1 700 is initially configured with the endpoint of the NRF 135 or information that allows it to map to an NRF endpoint. This configuration may serve as a foundational step, ensuring the gNB 700 can access the NRF 135 as a single bootstrapping point for discovering other NFs.

In step 1A, gNB 1 700 queries the NRF 135 to obtain a profile of an NF of type A. For example, if NF A represents an AMF, the gNB might send a query specifying the need for a mobility management function in a specific geographical area or network slice. The NRF 135 processes this query and identifies the relevant NF profiles based on the gNB's request.

In step 2A, the NRF 135 responds to the gNB 700 with the profile of NF A. This profile may include essential details such as the endpoint address of NF A, supported protocols (e.g., NG-AP for AMF communication), and additional attributes like capacity or supported services. For instance, the profile might indicate that NF A is an AMF capable of handling slice-specific requests or high-load scenarios.

In step 3A, gNB 1 700 uses the information obtained from the NF profile to establish communication with NF A. For example, the gNB 700 might initiate an SCTP connection to the endpoint provided in the profile and begin mobility-related signaling or session management tasks.

Similarly, in step 1B, the gNB 700 queries the NRF 135 for an NF of type B. NF B could represent a specialized CN entity related to ISAC, such as a sensing data management function or an Al-based inference service. The query might specify criteria like frequency range compatibility or support for edge computing.

In step 2B, the NRF 135 provides the profile of NF B, which may include details like the NF's endpoint, supported features, and configuration parameters. For instance, the profile might indicate that NF B supports low-latency processing for ISAC-related tasks or operates on a specific network slice.

In step 3B, gNB 1 700 establishes communication with NF B using the information from the profile. This enables the gNB 700 to interact with the NF for specialized services, such as exchanging sensing data or coordinating joint communication and sensing operations.

This NRF-based bootstrapping process may provide several advantages. It may allow the gNB 700 to use the NRF 135 as a centralized discovery point for various types of NFs, reducing dependency on AMFs for endpoint resolution. For example, instead of querying the AMF to locate ISAC-related NFs, the gNB 700 can directly retrieve the necessary profiles from the NRF 135. This approach may also simplify network deployment and enhance scalability by decoupling RAN-to-CN interaction from the core network's topology. Additionally, it may support future-proofing by enabling discovery of new types of NFs as services and functionalities evolve in 5G and beyond.

The proposed solution considers a variety of parameters for a RAN profile that collectively describe the capabilities, configurations, and services of a RAN node in detail. Node capabilities may be included to specify the functionalities the RAN node supports. These capabilities may encompass enhanced Mobile Broadband (eMBB), ultra-reliable low-latency communication (URLLC), Integrated Sensing and Communication (ISAC), and hardware-specific features such as the availability of GPUs, FPGAs, accelerators, or high-capacity network cards. The capabilities may also include details about the link bandwidth and cloud-related features, such as whether Kubernetes is supported. For example, the RAN profile may specify that Kubernetes version 1.21 is supported. The profile may further outline the supported radio access technologies (RATs) and RAT types that the RAN node can operate with, ensuring compatibility with the network environment.

The RAN profile may also provide information about the node's services, such as the APIs that the RAN node exposes for interaction with other network functions. Endpoint addresses may be included to enable communication with the RAN node, and these may comprise IP addresses, Fully Qualified Domain Names (FQDNs), or Uniform Resource Locators (URLs). The profile may specify communication protocols supported by the RAN node, such as NG-AP, Xn-AP, E1-AP, F1-AP, or other ASN.1-based schemas, ensuring compatibility for signaling and data exchanges within the network.

Subscription-based service support may be another parameter, describing the types of subscription services the RAN node can handle. The profile may also detail cell-specific information, including Physical Cell Identifiers (Phy-CIDs) and Global Cell Identifiers (Global-CIDs), which may be needed for mobility management and handover operations. Location details, such as geographical coordinates or regional identifiers, may be included to provide spatial context for the RAN node's operations. The RAN profile may further specify the tracking areas to which the RAN node belongs, enabling efficient tracking and management of connected user equipment.

Frequencies and frequency bands supported by the RAN node may be included in the profile, detailing aspects such as ARPF indexes, frequency ranges, and bandwidth. This may ensure that the RAN node's spectrum usage aligns with network requirements and regulatory guidelines. Energy consumption and efficiency parameters may also be considered, describing the RAN node's capabilities for energy saving or its overall energy performance. These details may support energy-efficient operations and help network planners optimize resource allocation.

To summarize, the present disclosure proposes a RAN node for a telecommunication network with functionalities aimed at enhancing network efficiency, flexibility, and performance. The RAN node is configured to interact with a NRF, enabling dynamic registration, discovery, and communication with other RAN and CN nodes. An aspect of the present disclosure is the ability of the RAN node to register its capabilities and configurations with the NRF through a detailed RAN profile. This profile may encompass a wide range of parameters, including node capabilities such as support for specific services like eMBB, URLLC, and ISAC. It may also include hardware details, supported RATs, protocols, endpoint addresses, cell identifiers, location, frequencies, energy efficiency metrics, and tracking area information.

The present disclosure may enable the RAN node to query the NRF using parameters from its RAN profile to discover relevant RAN or CN nodes. These queries can be tailored based on criteria such as geographical proximity, load capacity, or service-specific requirements. This functionality may support efficient discovery of neighboring nodes for mobility management, handover optimization, and the identification of CN nodes offering specific services or functionalities. Additionally, the RAN node may filter query results to narrow down potential target nodes and dynamically update its profile in response to changes in its capabilities or configurations.

The present disclosure further introduces a mechanism for the RAN node to subscribe to notifications from the NRF. Through subscriptions, the RAN node can receive updates about new RAN nodes, changes to existing profiles, or down nodes that match predefined parameters. These parameters can include location-based criteria, signal propagation characteristics, supported frequencies, or node capabilities. Notifications may enable the RAN node to proactively manage its interactions and establish connections with other network functions before events like mobility reports or handover triggers occur.

Another aspect of the present disclosure is the capability of the RAN node to establish communication with discovered nodes using information obtained from the NRF. The RAN node may use endpoint addresses, supported protocols, and configurations specified in the returned profiles to establish secure and efficient communication. Supported protocols include NG-AP, Xn-AP, and SBA interfaces, ensuring compatibility with both traditional and modern network designs.

The present disclosure also proposes the use of RAN profiles to improve mobility and handover procedures. By integrating UE measurement reports with RAN profile information obtained from the NRF, the RAN node can select the most suitable target for handover, based on detailed insights into the capabilities and configurations of neighboring nodes. This approach may enhance the accuracy and efficiency of mobility management, reducing delays and improving user experience.

The RAN node's ability to dynamically interact with the NRF, process updates, and establish connections with other nodes is complemented by its compatibility with a wide range of network scenarios. It may support automatic neighbor cell relation management, optimized mobility, and efficient discovery of CN nodes offering specialized services. The proposed solution may reduce reliance on AMFs for endpoint resolution, introduces caching capabilities for NRF information, and simplifies network scaling by decoupling responsibilities between the RAN and CN.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A Radio Access Network, RAN, node for a telecommunication network, comprising processing circuitry configured to
register the RAN node with a Network Repository Function, NRF, by providing a RAN profile including parameters indicative of the node's capabilities and/or configurations; query the NRF using the parameters in the RAN profile to obtain information about other RAN or Core Network, CN, nodes;
establish communication with other RAN or CN nodes based on the information obtained from the NRF.

2. The RAN node of claim 1, wherein the RAN profile includes at least one of an endpoint address of the RAN node for communication;
supported communication protocols; and
identifiers of services provided by the RAN node,
supported radio access technologies, RATs,
supported RAT types,
supported frequency bands,
energy efficiency metrics;
geographical or signal-based location information of the RAN node; and
load or traffic-handling capacity of the RAN node,
identifiers of supported subscription types;
tracking area identifiers associated with the RAN node; and
cell information, including Physical Cell IDs and/or Global Cell IDs.

3. The RAN node of any one of the previous claims, wherein the processing circuitry is configured to
dynamically update the RAN profile in response to changes in the node's capabilities or configurations, and notify the NRF of such updates.

4. The RAN node of any one of the previous claims, wherein the RAN profile is formatted according to a standardized data model compatible with a Service-Based Architecture, SBA, interface.

5. The RAN node of any one of the previous claims, wherein the processing circuitry is configured to
send a query request to the NRF to obtain an endpoint associated with a specific RAN or Core Network, CN node, the RAN or CN node, the request including one or more query parameters; and
receive a response from the NRF containing information about RAN or CN nodes matching the query parameters.

6. The RAN node of claim 5, wherein the processing circuitry is configured to receive a Network Function, NF, profile from the NRF in response to the query, the NF profile comprising:
the endpoint address of a RAN or CN node;
supported protocols for communication with the RAN or CN node; and
configurations and capabilities of the RAN or CN node.

7. The RAN node of claim 6, wherein the processing circuitry is further configured to establish communication with the RAN or CN node using the endpoint address and a protocol specified in the NF profile.

8. The RAN node of claim 7, wherein the protocol used for establishing communication is selected from
NG Application Protocol (NG-AP),
Xn Application Protocol (Xn-AP), or
SBA interfaces based on HTTP/RESTful APIs.

9. The RAN node of any one of claims 5 to 8, wherein the processing circuitry is configured to
periodically send updated queries to the NRF to account for changes in the status or capabilities of RAN or CN nodes.

10. The RAN node of any one of claims 5 to 9, wherein the processing circuitry is configured to
query dynamically in response to an event, including:
receipt of measurement reports from a user equipment, UE;
detection of changes in the RAN node's operational parameters; or
a trigger for initiating a handover or mobility management procedure.

11. The RAN node of any one of the previous claims, wherein the processing circuitry is further configured to
receive, from a user equipment, UE, a report including one or more cell identifiers; query the NRF using the cell identifiers to identify one or more target RAN nodes associated with the reported cell identifiers.

12. The RAN node of claim 11, wherein the query to the NRF includes additional parameters to identify RAN nodes based on
geographical proximity to the reported cell identifiers;
signal propagation characteristics relative to the reported cell identifiers.

13. The RAN node of claim 11 or 12, wherein the processing circuitry is configured to select a target RAN node for handover based on information obtained from the NRF, including the capabilities and configurations of the identified RAN nodes.

14. The RAN node of any one of the previous claims, wherein the processing circuitry is further configured to subscribe to notifications from the NRF for updates to RAN profiles based on one or more predefined parameters, wherein the predefined parameters for subscription include at least one of
location-based criteria, including geographical distance or specified geographical areas;
pathloss-based criteria, including as signal pathloss distance relative to the RAN node's location;
frequencies or frequency bands supported by other RAN nodes;
capabilities supported by other RAN nodes, including specific services or hardware features.

15. The RAN node of claim 13 or 14, wherein the processing circuitry is configured to: receive a notification from the NRF when a new RAN profile is registered or an existing RAN profile is updated that matches the parameters of the subscription.

## Amended claims

### Amended claims in accordance with Rule 137(2) EPC.

1. A Radio Access Network, RAN, node (700) for a telecommunication network, comprising
processing circuitry (710) configured to
register the RAN node (700) with a Network Repository Function, NRF (135), by providing a RAN profile including parameters indicative of the RAN node's capabilities and/or configurations;
query the NRF (135) using the parameters in the RAN profile to obtain information about other RAN nodes (700-2, 700-3) or Core Network, CN, (130) nodes;
establish communication with other RAN (700-2, 700-3) or CN (130) nodes based on the information obtained from the NRF (135); and
dynamically update the RAN profile in response to changes in the node's capabilities or configurations, and notify the NRF (135) of such updates.

2. The RAN node (700) of claim 1, wherein the RAN profile includes at least one of an endpoint address of the RAN node for communication;
supported communication protocols; and
identifiers of services provided by the RAN node,
supported radio access technologies, RATs,
supported RAT types,
supported frequency bands,
energy efficiency metrics;
geographical or signal-based location information of the RAN node; and
load or traffic-handling capacity of the RAN node,
identifiers of supported subscription types;
tracking area identifiers associated with the RAN node; and
cell information, including Physical Cell IDs and/or Global Cell IDs.

3. The RAN node (700) of any one of the previous claims, wherein the RAN profile is formatted according to a standardized data model compatible with a Service-Based Architecture, SBA, interface.

4. The RAN node (700) of any one of the previous claims, wherein the processing circuitry (710) is configured to
send a query request to the NRF (135) to obtain an endpoint associated with a specific RAN or Core Network, CN node, the RAN or CN node, the request including one or more query parameters; and
receive a response from the NRF (135) containing information about RAN or CN nodes matching the query parameters.

5. The RAN node (700) of claim 4, wherein the processing circuitry (710) is configured to receive a Network Function, NF, profile from the NRF (135) in response to the query, the NF profile comprising:
the endpoint address of a RAN or CN node;
supported protocols for communication with the RAN or CN node; and
configurations and capabilities of the RAN or CN node.

6. The RAN node (700) of claim 5, wherein the processing circuitry (710) is further configured to establish communication with the RAN or CN node using the endpoint address and a protocol specified in the NF profile.

7. The RAN node (700) of claim 6, wherein the protocol used for establishing communication is selected from
NG Application Protocol, NG-AP,
Xn Application Protocol, Xn-AP, or
SBA interfaces based on HTTP/RESTful APIs.

8. The RAN node (700) of any one of claims 4 to 7, wherein the processing circuitry (710) is configured to
periodically send updated queries to the NRF (135) to account for changes in the status or capabilities of RAN or CN nodes.

9. The RAN node (700) of any one of claims 4 to 8, wherein the processing circuitry (710) is configured to
query dynamically in response to an event, including:
receipt of measurement reports from a user equipment, UE;
detection of changes in the RAN node's operational parameters; or
a trigger for initiating a handover or mobility management procedure.

10. The RAN node (700) of any one of the previous claims, wherein the processing circuitry (710) is further configured to
receive, from a user equipment, UE, a report including one or more cell identifiers; query the NRF (135) using the cell identifiers to identify one or more target RAN nodes associated with the reported cell identifiers.

11. The RAN node (700) of claim 10, wherein the query to the NRF (135) includes additional parameters to identify RAN nodes based on
geographical proximity to the reported cell identifiers;
signal propagation characteristics relative to the reported cell identifiers.

12. The RAN node (700) of claim 10 or 11, wherein the processing circuitry (710) is configured to select a target RAN node for handover based on information obtained from the NRF (135), including the capabilities and configurations of the identified RAN nodes.

13. The RAN node (700) of any one of the previous claims, wherein the processing circuitry (710) is further configured to subscribe to notifications from the NRF (135) for updates to RAN profiles based on one or more predefined parameters, wherein the predefined parameters for subscription include at least one of
location-based criteria, including geographical distance or specified geographical areas;
pathloss-based criteria, including as signal pathloss distance relative to the RAN node's location;
frequencies or frequency bands supported by other RAN nodes;
capabilities supported by other RAN nodes, including specific services or hardware features.

14. The RAN node (700) of claim 12 or 13, wherein the processing circuitry is configured to:
receive a notification from the NRF (135) when a new RAN profile is registered or an existing RAN profile is updated that matches the parameters of the subscription.

15. A method for a RAN node (700) for a telecommunication network, the method comprising
registering the RAN node (700) with a NRF (135) by providing a RAN profile including parameters indicative of the RAN node's (700) capabilities and/or configurations; querying the NRF (135) using the parameters in the RAN profile to obtain information about other RAN or CN nodes;
establishing communication with other RAN or CN nodes based on the information obtained from the NRF (135); and
dynamically updating the RAN profile in response to changes in the node's capabilities or configurations, and notify the NRF (135) of such updates.
